(19) Europäisches Patentamt
European Patent Office
Office européen des brevets

(11) EP 4 148 890 A1

(12) EUROPEAN PATENT APPLICATION
published in accordance with Art. 153(4) EPC

(43) Date of publication:
**15.03.2023 Bulletin 2023/11**

(21) Application number: **21943333.1**

(22) Date of filing: **30.07.2021**

(51) International Patent Classification (IPC):
***H01M 50/409** (2021.01)* ***C08J 9/26** (2006.01)*

(86) International application number:
**PCT/CN2021/109904**

(87) International publication number:
**WO 2023/004820 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Contemporary Amperex Technology Co., Limited**
  **Ningde, Fujian 352100 (CN)**
- **Hunan Chinaly New Material Co., Ltd**
  **Changde, Hunan 415000 (CN)**

(72) Inventors:
- **YANG, Jianrui**
  **Ningde, Fujian 352100 (CN)**
- **ZHAO, Fenggang**
  **Ningde, Fujian 352100 (CN)**
- **WANG, Lianguang**
  **Zaozhuang, Shandong 277500 (CN)**
- **YANG, Tianle**
  **Changsha, Hunan 410001 (CN)**

(74) Representative: **Gong, Jinping**
**CocreateIP**
**Eggenfeldenerstraße 56**
**81929 München (DE)**

# (54) ISOLATION FILM AND PREPARATION METHOD THEREFOR, ELECTROCHEMICAL APPARATUS, ELECTROCHEMICAL DEVICE, AND ELECTRIC APPARATUS

(57) The present application provides a separator and a preparation method thereof, an electrochemical device, an electrochemical apparatus and a powered device. The separator comprises a base film, the base film has a tensile energy per unit thickness of ≥1.8J/10μm in both MD direction and TD direction, and an elongation of ≥150% in both MD direction and TD direction, and the thickness of the base film is 2μm~40μm.

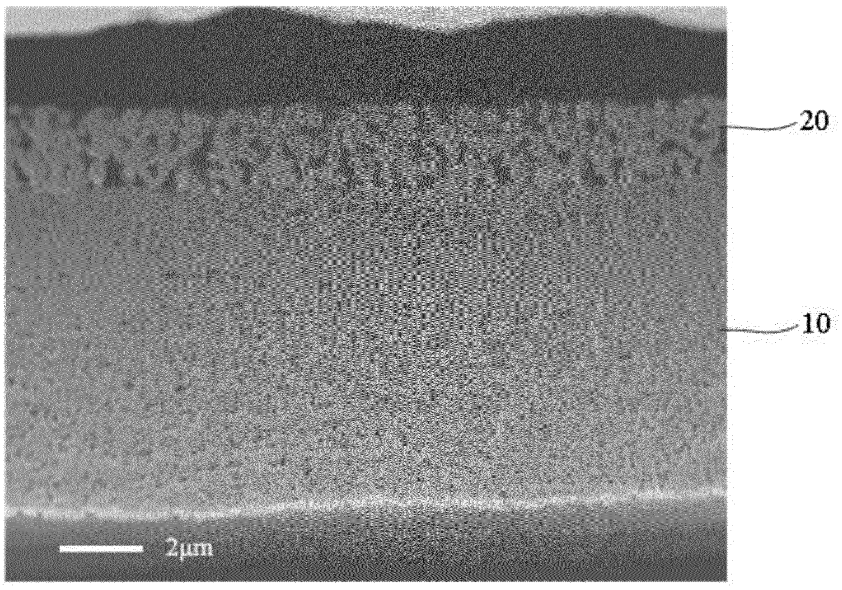


FIG. 1

EP 4 148 890 A1

## Description

### Technical Field

The present application belongs to the technical field of energy storage devices, and specifically relates to a separator and a preparation method thereof, an electrochemical device, an electrochemical apparatus and a powered device.

### Background Art

In recent years, electrochemical devices represented by secondary batteries have been widely used and popularized in various electronic products and new energy vehicles and other industries. At the same time, there are also higher demands on the energy density of electrochemical devices. As one direction to increase the energy density of an electrochemical device, it is necessary to reduce weight or volume of components in the electrochemical device. For example, a separator is generally provided in a secondary battery, and the weight and volume of the secondary battery can be reduced by thinning the thickness of the separator to desirably increase the energy density of the secondary battery. The separator is a microporous porous film, which is used for separating a positive electrode sheet from a negative electrode sheet, preventing short circuit from occurring between the positive electrode sheet and the negative electrode sheet inside the battery, and at the same time allowing active ions to pass through, and also functioning to retain an electrolyte solution. However, the thickness of the separator is relatively small, resulting in an increased risk of internal short circuits of the secondary battery, whereby the safety performance of the secondary battery is greatly challenged.

### Summary of the Invention

A first aspect of the present application provides a separator including a base film, wherein the base film has a tensile energy per unit thickness of ≥1.8J/10μm in both machine direction (abbreviated as MD) and transverse direction (abbreviated as TD), and an elongation of ≥ 150% in both MD direction and TD direction;

Wherein, the tensile energy per unit thickness is $\frac{F \times \Delta L}{d} \times 10$,

F represents a force value in N at which a test sample of the base film with a gauge length of 40mm and a width of 15mm is stretched to break at a constant rate of 50mm/min, ΔL represents a tensile displacement in m at which the test sample is stretched to break, and d represents an initial thickness in μm of the test sample;

The thickness of the base film is 2μm-40μm.

In the separator provided by the present application, the base film with a relatively small thickness also satisfies that the tensile energy per unit thickness and the elongation in MD direction are within an appropriate range, the tensile energy per unit thickness and the elongation in TD direction are within an appropriate range, and thus can have relatively high toughness and strength. Therefore, the separator can effectively inhibit piercing by foreign particles, and greatly reduce the risk of short circuit failure of an electrochemical device using the separator, such as a secondary battery. In particular, the separator can also have a relatively high heat resistance, its shrinkage under a heated condition is relatively small, and the hole expansion rate of the holes formed by damage is relatively low under the heated condition. Therefore, even when the electrochemical device using the separator is mechanically damaged by nail piercing or the like, the separator can still provide good separation, thus reducing the risk of thermal runaway of the electrochemical device. Therefore, the electrochemical device can have relatively high safety performance.

In any of embodiments of the present application, the base film has a tensile energy per unit thickness in MD direction of 1.8J/10μm~50J/10μm, optionally 2.4J/10μm~50J/10μm, and further optionally 2.7J/10μm~30J/10μm. The tensile energy per unit thickness of the base film in MD direction is in an appropriate range, which can further improve the piercing resistance of the separator against foreign particles, and reduce the rupture area when the separator is damaged, thereby improving the safety performance of the electrochemical device.

In any of embodiments of the present application, the base film has a tensile energy per unit thickness in TD direction of 1.8J/10μm~50J/10μm, optionally 2J/10μm~50J/10μm, and further optionally 2.5J/10μm~30J/10μm. The tensile energy per unit thickness of the base film in TD direction is in an appropriate range, which can further improve the piercing resistance of the separator against foreign particles, and reduce the rupture area when the separator is damaged, thereby improving the safety performance of the electrochemical device.

In any of embodiments of the present application, the base film has an elongation in MD direction of 150%~4000%, optionally 180%~4000%, and further optionally 200%~2000%. The elongation of the base film in MD

direction is in an appropriate range, so that the separator has a relatively strong piercing resistance against foreign materials. Even when the electrochemical device is mechanically damaged, the rupture area of the separator is relatively small, thus the hazard caused by the mechanical damage can be reduced. Therefore, the safety performance of the electrochemical device can be improved.

In any of embodiments of the present application, the base film has an elongation in TD direction of 150%~4000%, optionally 180%~4000%, and further optionally 200%~2000%. The elongation of the base film in TD direction is in an appropriate range, so that the separator has a relatively strong piercing resistance against foreign materials. Even when the electrochemical device is mechanically damaged, the rupture area of the separator is relatively small, thus the hazard caused by the mechanical damage can be reduced. Therefore, the safety performance of the electrochemical device can be improved.

In any of embodiments of the present application, the thickness of the base film is optionally 2μm~20μm, further optionally 3μm~15μm, and still further optionally 3μm~10μm. The base film has an appropriate thickness, which allows for the separator to have relatively good piercing resistance against foreign particles, and also helps to reduce the volume and weight of the electrochemical device. Therefore, the electrochemical device can have relatively high safety performance and energy density.

In any of embodiments of the present application, the base film is a polymeric base film, and the mass proportion of polyethylene-based polymer in the base film is 50% or more, optionally 80% or more, and further optionally 100%, based on the total mass of polymers in the base film formulation. The polyethylene-based polymer comprises one or more of polyethylene, copolymer of ethylene and α-olefin, and optionally, the α-olefin is selected from one or more of propylene, 1-butene and 1-octene. A base film composed of a polyethylene-based polymer as the main polymer has good strength and toughness, so that the separator has relatively high piercing resistance against foreign particles, which in turn improves the safety performance of the electrochemical device.

In any of embodiments of the present application, the base film comprises two or more polyethylene-based polymers, satisfying: $1 < M1/M2 \leq 50$, optionally $2 \leq M1/M2 \leq 30$, and further optionally $3 \leq M1/M2 \leq 10$; wherein M1 represents the weight average molecular weight of the polyethylene-based polymer having the largest weight average molecular weight in the base film formulation, and M2 represents the weight average molecular weight of the polyethylene-based polymer having the smallest weight average molecular weight in the base film formulation. By using different polyethylene-based polymers for reasonable matching, the separator can have relatively high piercing resistance against foreign particles in all parts, and the separator can also be highly heat resistant. Therefore, the separator can sufficiently and effectively function in the electrochemical device to separate a positive electrode from a negative electrode, and further improves the safety performance of the electrochemical device.

In any of embodiments of the present application, M1 is 1,100,000~5,000,000, and optionally 1,500,000~3,000,000.

In any of embodiments of the present application, M2 is 100,000~1,000,000, and optionally 300,000~1,000,000.

In any of embodiments of the present application, the mass proportion of the polyethylene-based polymer having the largest weight average molecular weight in the base film is 10%~100%, optionally 10%~90%, and further optionally 30%~70%, based on the total mass of polymers in the base film formulation. This helps to improve the piercing resistance of the separator.

In any of embodiments of the present application, the mass proportion of the polyethylene-based polymer having the smallest weight average molecular weight in the base film is 0-90%, optionally 10%~90%, and further optionally 30%~70%, based on the total mass of polymers in the base film formulation. This is helpful for the separator to achieve a relatively high toughness. As a result, the separator has a relatively strong piercing resistance against foreign materials, and its rupture area is relatively small when it is subjected to extreme mechanical damage such as piercing or the like.

In any of embodiments of the present application, the polyethylene-based polymer has a crystallinity of ≤65%, optionally ≤50%, and further optionally ≤45%. The crystallinity of the polyethylene-based polymer is in an appropriate range, so that the separator can have high ductility. Therefore, the separator has a relatively high piercing resistance against foreign particles, thereby improving the safety performance of the electrochemical device.

In any of embodiments of the present application, a heat resistant layer is further included, and the heat resistant layer is located on at least one surface of the base film. The heat resistant layer can improve the heat resistance of the separator. When the electrochemical device is pierced and short-circuited, the melting of the separator by the heat generated by the short circuit can be effectively suppressed to prevent further expansion of the area of the short circuit point, thereby further reducing the risk of thermal runaway of the electrochemical device.

In any of embodiments of the present application, the heat resistant layer comprises heat resistant particles, the mass proportion of which in the heat resistant layer is ≥40%, optionally is 40%~99%, and further optionally is 80%~97%. The appropriate amount of the heat resistant particles contained in the heat resistant layer can further improve the piercing resistance against foreign particles and the heat resistance of the separator, thereby further improving the safety performance of the electrochemical device.

In any of embodiments of the present application, the heat resistant particles may comprise one or more of

inorganic heat resistant particles and organic heat resistant particles. In some examples, the inorganic heat resistant particles may be selected from one or more of alumina, silicon oxide, titanium oxide, calcium carbonate, magnesium oxide, magnesium hydroxide, boehmite, barium titanate, and barium sulfate. In some examples, the organic heat resistant particles may be selected from one or more of polyacrylic resin, aramid, polyphenylene sulfide, polymethyl methacrylate, polyvinylidene fluoride, polytetrafluoroethylene, and polyvinylidene fluoride-hexafluoropropylene copolymer.

In any of embodiments of the present application, the heat resistant layer has a thickness of ≥0.1mm, optionally 0.1mm~10mm, and further optionally 1mm~3mm. The thickness of the heat resistant layer satisfies the above conditions, which can effectively improve the piercing resistance against foreign particles and the heat resistance of the separator.

In any of embodiments of the present application, the peel strength between the heat resistant layer and the base film is ≥10N/m, optionally is 15N/m~200N/m, and further optionally is 20N/m~200N/m. The interlayer bonding of the separator is relatively good, so that the piercing resistance against foreign particles and the heat resistance of the separator can be improved.

In any of embodiments of the present application, the separator satisfies: $(l_{M0}-l_M)/l_{M0}\times 100\%\leq 30\%$, optionally $(l_{M0}-l_M)/l_{M0}\times 100\%\leq 10\%$, and further optionally $(l_{M0}-l_M)/l_{M0}\times 100\%\leq 5\%$, wherein $l_M$ represents a length in mm in MD direction of a test sample of the separator with a length $l_{M0}$ in MD direction of 100mm and a length $l_{T0}$ in TD direction of 100mm after being held at 130°C for 1h.

In any of embodiments of the present application, the separator satisfies: $(l_{T0}-l_T)/l_{T0}\times 100\%\leq 30\%$, optionally $(l_{T0}-l_T)/l_{T0}\times 100\%\leq 10\%$, and further optionally $(l_{T0}-l_T)/l_{T0}\times 100\%\leq 5\%$, wherein $l_T$ represents a length in mm in TD direction of a test sample of the separator with a length $l_{M0}$ in MD direction of 100mm and a length $l_{T0}$ in TD direction of 100mm after being held at 130°C for 1h。

The relatively small shrinkage of the separator under a heated condition helps to further improve the safety performance of the electrochemical device.

In any of embodiments of the present application, after the separator is pierced by a needle with a cross-sectional area of $0.5mm^2$ and held at 150°C for 10 min, the needle hole has a hole expansion rate of ≤8%, optionally ≤5%, further optionally ≤4%, and still further optionally ≤3%. The hole expansion rate is $(S_1-S_0)/S_0\times 100\%$, wherein $S_0$ represents the initial area of the needle hole, and $S_1$ represents the needle hole area after holding at 150°C for 10 min. After the separator is pierced by the needle, the needle hole expansion rate is relatively small under the heated condition, so that the heat resistance thereof is relatively high, and in particular, the relatively small rupture area can reduce the risk of thermal runaway of the electrochemical device.

A second aspect of the present application provides a method for preparing a separator, comprising:

(a) providing a molten base film formulation comprising a polymer and a pore-forming agent;
(b) extruding the base film formulation and cooling to form a sheet;
(c) stretching the sheet in MD direction;
(d) stretching the sheet in TD direction;
(e) removing the pore-forming agent from the sheet to form a porous sheet;
(f) heat-setting the porous sheet to obtain a base film;

wherein, the base film is used as the separator, or the base film is used as the separator after post-treatment;

The base film has a tensile energy per unit thickness of ≥1.8J/10μm in both longitudinal MD direction and transverse TD direction, and an elongation of ≥150% in both MD direction and TD direction; the thickness of the base film is 2μm~40μm.

The base film obtained according to the preparation method of the present application has a relatively small thickness, and at the same time, the base film also has an appropriate tensile energy per unit thickness and an appropriate elongation in MD direction, as well as an appropriate tensile energy per unit thickness and an appropriate elongation in TD direction, so that higher toughness and strength can be obtained. The electrochemical device using the separator can have relatively high safety performance.

In any of embodiments of the present application, the post-treatment of the base film may comprise: (g) forming a heat resistant layer on at least one surface of the base film. A separator comprising a base film and a heat resistant layer on the surface of the base film is thus obtained.

In any of embodiments of the present application, the temperature of the cooling in step (b) is 15°C~30°C, and optionally 20°C~25°C.

In any of embodiments of the present application, the stretching ratio of the stretching in MD direction in step (c) is 3~6 times, optionally 3~5 times, and further optionally 3-4.5 times.

In any of embodiments of the present application, the stretching ratio of the stretching in TD direction in step (d) is 3~6 times, optionally 3~5 times, and further optionally 3.5-5 times.

In any of embodiments of the present application, the heat-setting in step (f) comprises heat-setting the porous sheet at a temperature of 130°C or higher. Optionally, the temperature is 130°C~150°C, and further optionally is

134°C~145°C.

A third aspect of the present application provides an electrochemical device including the separator according to the present application. The electrochemical device of the present application can obtain a relatively high safety performance due to the use of the separator of the present application.

A fourth aspect of the present application provides an electrochemical apparatus including the electrochemical device according to the present application. The electrochemical apparatus of the present application includes the electrochemical device of the present application, and thus has a relatively high safety performance.

A fifth aspect of the present application provides a powered device, including at least one of the electrochemical device or electrochemical apparatus according to the present application. The powered device of the present application includes the electrochemical device or electrochemical apparatus of the present application, and thus has a relatively high safety performance.

**Description of Drawings**

Fig. 1 is a scanning electron microscope (SEM) image of a cross-section of a separator provided by an example of the present application at a magnification of 5000X.
Fig. 2 is an SEM image of a base film of a separator provided by an example of the present application at 5000X.
Fig. 3 is an SEM image of the base film shown in Fig. 2 at 20000X.
Fig. 4 is a schematic view of an embodiment of a secondary battery.
Fig. 5 is an exploded view of Fig.4.
Fig. 6 is a schematic view of an embodiment of a battery module.
Fig. 7 is a schematic view of an embodiment of a battery pack.
Fig. 8 is an exploded view of Fig.7.
Fig. 9 is a schematic view of an embodiment of a device in which a secondary battery is used as a power source.

**Detailed Description**

Hereinafter, embodiments of the separator of the present application and the method for preparing the same, together with the electrochemical device, electrochemical apparatus and powered device including the separator are specifically disclosed in detail with appropriate reference to the accompanying drawings. However, unnecessary detailed description may be omitted. For example, there are cases where detailed descriptions of well-known items and repeated descriptions of actually identical structures are omitted. This is to avoid unnecessary redundancy in the following descriptions and to facilitate the understanding of those skilled in the art. In addition, the accompanying drawings and subsequent descriptions are provided for those skilled in the art to fully understand the present application, and are not intended to limit the subject matter recited in the claims.

A "range" disclosed in the present application is defined in terms of a lower limit and an upper limit, a given range is defined by selecting a lower limit and an upper limit, and the selected lower and upper limits define the boundary of a particular range. A range defined in this way may be inclusive or exclusive of end values, and may be arbitrarily combined, that is, any lower limit may be combined with any upper limit to form a range. For example, if ranges of 60~120 and 80~110 are listed for a particular parameter, it is understood that ranges of 60~110 and 80~120 are also expected. In addition, if the minimum range values listed are 1 and 2, and if the maximum range values listed are 3, 4 and 5, the following ranges are all expected: 1-3, 1-4, 1~5, 2~3, 2~4 and 2~5. In the present application, unless otherwise stated, a numerical range "a~b" represents an abbreviated representation of any combination of real numbers between a to b, wherein a and b are both real numbers. For example, the numerical range "0~5" indicates that all real numbers between "0~5" have been listed herein, and "0~5" is only an abbreviated representation of a combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise

steps (c), (a) and (b), and so on.

Unless otherwise specified, references to "including" and "comprising" in the present application are intended to be open-ended, or may be closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

Unless otherwise specified, references to "or more" and "or less" in the present application are intended to encompass the recited number, and "several" means two or more.

The present application provides a separator comprising a base film, wherein the base film has a tensile energy per unit thickness of ≥1.8J/10μm in both MD direction and TD direction, and an elongation of ≥150% in both MD direction and TD direction, and the thickness of the base film is 2μm~40μm.

The tensile energy per unit thickness is $\frac{F \times \Delta L}{d} \times 10$

F represents a force value in N at which a test sample of the base film with a gauge length of 40mm and a width of 15mm is stretched to break at a constant rate of 50mm/min, ΔL represents a tensile displacement in m at which the test sample is stretched to break, and d represents an initial thickness in μm of the test sample.

In order to make the test results more accurate, 5 test samples with a length of 100mm and a width of 15mm can be taken along the MD direction of the base film, wherein the length direction of the test sample is parallel to the MD direction of the base film; the test samples are respectively clamped in two opposite fixtures of a tensile machine, the gauge length of the test sample is set to 40mm (i.e., the distance between the fixtures), and a tensile test is conducted at a constant speed of 50mm/min. The force value F and the tensile displacement ΔL at tensile break of the test sample are read. The tensile energy per unit thickness of each test sample is calculated according to the formula for calculating tensile energy per unit thickness, and the average value is taken as the tensile energy per unit thickness of the base film in MD direction. The elongation of each test sample is calculated according to elongation=ΔL/0.1×100%, and the average value is taken as the elongation of the base film in MD direction. The tensile energy per unit thickness and the elongation of the base film in TD direction are tested with reference to the above-mentioned method. All of the above tests are conducted at room temperature and atmospheric pressure. Tensile machines from GOTECH Testing Machines Inc. such as model AI-3000-S can be used in the test. The test can be conducted with reference to the national standard GB/T 36363-2018.

The base film with a relatively small thickness satisfies that the tensile energy per unit thickness and the elongation in MD direction are within an appropriate range, and the tensile energy per unit thickness and the elongation in TD direction are within an appropriate range, thus the separator can have relatively high toughness and strength. Therefore, the separator can effectively inhibit piercing by foreign particles, and greatly reduce the risk of self-discharging and even thermal runaway caused by short-circuiting of an electrochemical device using the separator, such as a secondary battery. In particular, the separator can also have a relatively high heat resistance, its shrinkage under a heated condition is relatively small, and the hole expansion rate of the holes formed by damage is relatively low under the heated condition. Therefore, when the electrochemical device using the separator is mechanically damaged by nail piercing or the like, the separator can still provide good separation, thus reducing the risk of fire and explosion of the electrochemical device. Therefore, the electrochemical device can have relatively high safety performance.

In some embodiments, the base film has a tensile energy per unit thickness in MD direction of 1.8J/10μm~100J/10μm, optionally 1.8J/10μm~50J/10μm, 2.4J/10μm~50J/10μm, 2.7J/10μm~50J/10μm, 2.8J/10μm~50J/10μm, 2.5J/10μm~45J/10μm, or 2.7J/10μm~30J/10μm. The tensile energy per unit thickness of the base film in MD direction is in an appropriate range, so that the mechanical strength of the separator in MD direction is relatively high, and thus the separator has a relatively high piercing resistance against foreign particles. At the same time, the separator also has an appropriate flexibility in MD direction, so that when the electrochemical device is mechanically damaged, the rupture area of the separator is relatively small, thus reducing the hazard caused by the mechanical damage, and even allowing for the electrochemical device to operate normally in a short time.

In some embodiments, the base film has a tensile energy per unit thickness in TD direction of 1.8J/10μm~100J/10μm, optionally 1.8J/10μm~50J/10μm, 2J/10μm~50J/10μm, 2.4J/10μm~50J/10μm, 2.8J/10μm~50J/10μm, 2J/10μm~45J/10μm, or 2.5J/10μm~30J/10μm. The tensile energy per unit thickness of the base film in TD direction is in an appropriate range, so that the mechanical strength of the separator in TD direction is relatively high, and thus the separator has a relatively high piercing resistance against foreign particles. At the same time, the separator also has an appropriate flexibility in TD direction, so that when the electrochemical device is mechanically damaged, the rupture area of the separator is relatively small, thus reducing the hazard caused by the mechanical

damage, and even allowing for the electrochemical device to operate normally in a short time.

In some embodiments, the base film has an elongation in MD direction of 150%~4000%, optionally 180%~4000%, 180%~3000%, 200%~3000%, 250%~3000%, 200%~2000%, or 250%~2000%. The elongation of the base film in MD direction is in an appropriate range, so that the separator has a relatively good flexibility in MD direction and a relatively high mechanical strength. Therefore, the separator has a relatively strong piercing resistance against foreign materials. Even when the electrochemical device is mechanically damaged, the rupture area of the separator is relatively small, thereby reducing the hazard caused by the mechanical damage, and even allowing for the electrochemical device to operate normally in a short time.

In some embodiments, the base film has an elongation in TD direction of 150%~4000%, optionally 180%~4000%, 180%~3000%, 200%~3000%, 250%~3000%, 200%~2000%, or 250%~2000%. The elongation of the base film in TD direction is in an appropriate range, so that the separator has a relatively good flexibility in TD direction and a relatively high mechanical strength. Therefore, the separator has a relatively strong piercing resistance against foreign materials. Even when the electrochemical device is mechanically damaged, the rupture area of the separator is relatively small, thereby reducing the hazard caused by the mechanical damage, and even allowing for the electrochemical device to operate normally in a short time.

In some embodiments, the thickness of the base film is 2μm~30μm, optionally 2μm~20μm, 3μm~15μm, 3μm~10μm, 7μm~12μm, 5μm~10μm, or 2μm~9μm. The base film has an appropriate thickness, which allows for the separator to have relatively good piercing resistance against foreign particles, so as to effectively function to separate the positive electrode sheet from the negative electrode sheet, and also helps to reduce the volume and weight of the electrochemical device. Therefore, the electrochemical device can have relatively high safety performance and energy density.

In some embodiments, the base film is a polymeric base film. In the base film formulation, the polymer is predominantly a polyethylene-based polymer. In some examples, the mass proportion of the polyethylene-based polymer in the base film is 50% or more, optionally 80% or more, and further optionally 100%, based on the total mass of polymers in the base film formulation. The polyethylene-based polymer comprises one or more of polyethylene (PE), copolymer of ethylene and α-olefin. The α-olefin may be selected from α-olefins having 3~10 carbon atoms. Optionally, the α-olefin is selected from one or more of propylene, 1-butene, and 1-octene. Specific examples of the copolymer of ethylene and α-olefin may comprise one or more of polyethylene-propylene copolymer, polyethylene-butene copolymer, polyethylene-propylene-butene copolymer, and polyethylene-octene copolymer. A base film composed of a polyethylene-based polymer as the main polymer has good strength and toughness, so that the separator has relatively high piercing resistance against foreign particles, which in turn improves the safety performance of the electrochemical device.

The copolymer described in the present application may be a random copolymer. The term "random" means that comonomers are randomly arranged (i.e. randomly distributed) on the molecular chain of the copolymer.

In some embodiments, the base film may comprise two or more polyethylene-based polymers, satisfying: $1 < M1/M2 \leq 50$; optionally $1.2 \leq M1/M2 \leq 30$, $2 \leq M1/M2 \leq 30$, $2 \leq M1/M2 \leq 10$, $3 \leq M1/M2 \leq 10$, or $3 \leq M1/M2 \leq 6$. M1 represents the weight average molecular weight of the polyethylene-based polymer having the largest weight average molecular weight in the base film formulation, and M2 represents the weight average molecular weight of the polyethylene-based polymer having the smallest weight average molecular weight in the base film formulation. The base film uses two or more polyethylene-based polymers, and an appropriate relationship is satisfied between the molecular weights of the two or more polyethylene-based polymers, so that the separator can have relatively good uniformity and consistency as a whole. Therefore, the separator has a relatively high piercing resistance against foreign particles in all parts, thus better improving the safety performance of the electrochemical device. Furthermore, the separator can also have a relatively high heat resistance, and after being pierced, its hole expansion rate is relatively small under a heated condition. Therefore, the separator can sufficiently and effectively function in the electrochemical device to separate a positive electrode from a negative electrode, and further improves the safety performance of the electrochemical device.

In some embodiments, the mass proportion W1 of the polyethylene-based polymer having the largest weight average molecular weight in the base film is 10%~100%, based on the total mass of polymers in the base film formulation. In some examples, W1 < 100%, and optionally W1 is 10%~90%, 20%~80%, 30%~70%, 25%~60%, or 30%~50%. W1 is in an appropriate range, which helps to improve the piercing resistance of the separator.

In some embodiments, the mass proportion W2 of the polyethylene-based polymer having the smallest weight average molecular weight in the base film is 0-90%, based on the total mass of polymers in the base film formulation. In some examples, W2 > 0, optionally W2 is 10%~90%, 20%~80%, 30%~70%, 40%~75%, or 50%~70%. W2 is in an appropriate range, which is helpful for the separator to obtain a relatively high toughness. As a result, the separator has a relatively strong piercing resistance against foreign materials, and its rupture area is relatively small when it is subjected to extreme mechanical damage such as piercing or the like.

In some embodiments, M1 may be selected to be 1,100,000~5,000,000, or may be selected to be 1,500,000~3,000,000 or 1,500,000~2,500,000. In some embodiments, M2 may be selected to be 100,000~1,000,000, or may be selected to be 300,000~1,000,000 or 400,000~800,000. The polyethylene-based polymer has an appropriate

molecular weight, and can improve the toughness and strength of the base film, and thus can improve the piercing resistance of the separator against foreign particles, and effectively reduce the risk that the separator is pierced, so that the potential for battery thermal runaway caused by the piercing of the separator is greatly reduced.

In some embodiments, the polyethylene-based polymer has a crystallinity of ≤65%, optionally ≤60%, <_55%, <_50%, or ≤45%. The crystallinity of the polyethylene-based polymer is relatively low, and the resulting separator is less oriented, which is advantageous for increasing the elongation of the separator and providing the separator with a high ductility. Therefore, the separator has a relatively high piercing resistance against foreign particles, and the safety performance of the electrochemical device is further improved. In some examples, the polyethylene-based polymer has a crystallinity of ≥20%, ≥25%, ≥30%, ≥35%, ≥40%, or ≥45%. The crystallinity of the polyethylene-based polymer is in a given range, so that the separator can have a relatively high strength.

In some embodiments, in addition to the polyethylene-based polymer, the base film may optionally use other polymers known in the art. Examples of the other polymer may comprise one or more of polyolefin other than polyethylene-based polymers (such as polypropylene, polybutylene, etc.), polyimide (such as polypyromellitimide, polyamide-imide and polyetherimide, etc.), polyamide (such as aramid, etc.), polyester (such as polyethylene terephthalate, polypropylene terephthalate, polybutylene terephthalate, etc.), polyurethane, polycarbonate, polyacetal, polyetheretherketone, polyphenylene sulfide, fluoropolymer (such as polyvinylidene fluoride PVDF, polyvinylidene fluoride-hexafluoropropylene copolymer PVDF-HFP, polytetrafluoroethylene PTFE, etc.).

The base film is a microporous porous film. In some embodiments, the base film has a porosity of 20%-80%, optionally 20%~40%, and further optionally 25%~38%. The porosity of the base film is in an appropriate range, which is helpful for the separator to have an appropriate amount of electrolyte solution retention, so that the electrochemical device can balance relatively high cycling performance and energy density at the same time.

In some embodiments, the base film has a gas permeability value of 30s/100cc~300s/100cc, optionally 50s/100cc~250s/100cc, and further optionally 80s/100cc~200s/100cc. A gas permeability value of the base film in an appropriate range facilitates the passage of ions through the separator, thus contributing to relatively high capacity performance and cycling performance of the electrochemical device.

In some embodiments, the separator further comprises a heat resistant layer. The heat resistant layer may be located on at least one surface of the base film. As an example, the base film has two surfaces opposite in the direction of its own thickness, and the heat resistant layer may be located on either or both of the two surfaces.

The heat resistant layer comprises heat resistant particles. A pore channel through which ions pass can be formed between particles. The heat resistant particles may comprise one or more of inorganic heat resistant particles and organic heat resistant particles. As an example, the inorganic heat resistant particles may be selected from one or more of alumina, silicon oxide, titanium oxide, calcium carbonate, magnesium oxide, magnesium hydroxide, boehmite, barium titanate, and barium sulfate. As an example, the organic heat resistant particles may be selected from one or more of polyacrylic resin, aramid, polyphenylene sulfide, polymethyl methacrylate, polyvinylidene fluoride, polytetrafluoroethylene, and polyvinylidene fluoride-hexafluoropropylene copolymer. In some examples, the heat resistant particles comprise inorganic heat resistant particles.

The heat resistant layer can increase the strength of the separator, thereby further enhancing the piercing resistance of the separator against foreign particles. In particular, the heat resistant layer can improve the heat resistance of the separator. When the electrochemical device is short-circuited due to piercing of the separator in an abnormal situation, as the separator has relatively good heat resistance, further expansion of the area of the short circuit point caused by the melting of the separator by the heat generated by the short circuit can be effectively suppressed, thereby further reducing the risk of thermal runaway or short circuit failure of the electrochemical device.

In some embodiments, the mass proportion of the heat resistant particles in the heat resistant layer is ≥40%, optionally is 40%~99%, 60%~99%, 80%~99%, 80%~97%, 80%~95%, 80%~90%, 90%~97%, or 85%~95%. The appropriate amount of the heat resistant particles contained in the heat resistant layer can further improve the piercing resistance against foreign particles and the heat resistance of the separator, thereby further improving the safety performance of the electrochemical device.

In some embodiments, the heat resistant layer comprises a binder. The binder can bond the heat resistant particles to the base film, and achieve a relatively high peel strength between the heat resistant layer and the base film. As an example of the binder for the heat resistant layer, one or more of polyacrylate, polybutadiene-styrene copolymer, polyacrylic acid, polyacrylonitrile-acrylic acid copolymer, polytetrafluoroethylene, polyvinylidene fluoride, polymethyl methacrylate, polyvinylidene fluoride-hexafluoropropylene copolymer may be included.

In some embodiments, the heat resistant layer has a thickness of ≥0.1mm. Optionally, the thickness of the heat resistant layer is 0.1mm~10mm, 0.5mm~8mm, 0.1mm~5mm, 1mm~5mm, or 1mm~3mm. The thickness of the heat resistant layer satisfies the above conditions, which can effectively improve the piercing resistance against foreign particles and the heat resistance of the separator.

In some embodiments, the peel strength between the heat resistant layer and the base film is ≥10N/m, optionally is 10N/m~200N/m, 15N/m~200N/m, 15N/m~100N/m, 20N/m~50N/m, 20N/m~200N/m, 30N/m~200N/m, or

40N/m~200N/m. A relatively high peel strength between the heat resistant layer and the base film results in a relatively good interlayer bonding of the separator. Therefore, the piercing resistance against foreign particles and the heat resistance of the separator are further improved.

In some embodiments, the separator satisfies: heat shrinkage in MD direction $(l_{M0}-l_M)/l_{M0}\times 100\% \leq 30\%$, optionally $(l_{M0}-l_M)/l_{M0}\times 100\% \leq 20\%$, ≤15%, ≤12%, ≤10%, ≤5%, ≤3%, or ≤2.5%. $l_M$ represents a length in mm in MD direction of a test sample of the separator with a length $l_{M0}$ in MD direction of 100mm and a length $l_{T0}$ in TD direction of 100mm after being held at 130°C for 1h.

In some embodiments, the separator satisfies: heat shrinkage in TD direction $(l_{T0}-l_T)/l_{T0}\times 100\% \leq 30\%$, optionally $(l_{T0}-l_T)/l_{T0}\times 100\% \leq 20\%$, ≤15%, ≤12%, ≤10%, ≤5%, ≤3%, or ≤2.5%. $l_T$ represents a length in mm in TD direction of a test sample of the separator with a length $l_{M0}$ in MD direction of 100mm and a length $l_{T0}$ in TD direction of 100mm after being held at 130°C for 1h.

The separator can be cut into a test sample with a length $l_{M0}$ in MD direction of 100mm and a length $l_{T0}$ in TD direction of 100mm, the MD direction of the test sample is parallel to the MD direction of the separator, and the TD direction of the test sample is parallel to the TD direction of the separator; the test sample is placed in an oven at 130°C and heated for 1h; a length $l_M$ in MD direction or a length $l_T$ in TD direction of the test sample after heating is measured, and a heat shrinkage in MD or TD direction is calculated. The test can be conducted with reference to the national standard GB/T 36363-2018.

The separator has a relatively small shrinkage under a heated condition, and thus has a relatively high heat resistance, which helps to further improve the safety performance of the electrochemical device.

In some embodiments, after the separator is pierced by a needle with a cross-sectional area of $0.5mm^2$ and held at 150°C for 10 min, the needle hole has a hole expansion rate of ≤8%, optionally ≤7%, ≤6%, ≤5%, ≤4.5%, ≤4%, ≤3%, or ≤2.5%. The hole expansion rate is $(S_1-S_0)/S_0\times 100\%$, wherein $S_0$ represents the initial area of the needle hole, and $S_1$ represents the needle hole area after holding at 150°C for 10 min. The cross-section of the needle is, for example, circular. $S_0$ and Si can be measured using instruments and methods known in the art. Examples include microscopes. As an example, GP-300C-13.3" display-0.5x object lens from Kunshan gaopin precision instrument co. LTD can be used to magnify through the instrument and mark the hole area with the system-provided area labeling module. After the separator is pierced by the needle, the needle hole expansion rate is relatively small under the heated condition, so that the heat resistance thereof is relatively high, and in particular, the relatively small rupture area can reduce the risk of thermal runaway of the electrochemical device.

The crystallinity of polyethylene-based polymers has a meaning well known in the art, and can be measured using instruments and methods known in the art. An exemplary test method is as follows: measuring the melting enthalpy of the polyethylene-based polymer by differential scanning calorimetry (DSC), and then dividing by the melting enthalpy of a 100% crystalline polyethylene-based polymer to obtain the crystallinity. The test can be conducted using a differential scanning calorimeter DSC (e.g. DSC214 from NETZSCH, Germany). The test can be conducted with reference to the standard GB/T 19466.3-2004.

The weight average molecular weight of polyethylene-based polymers has a meaning well known in the art, and can be measured using instruments and methods known in the art. Examples include high temperature gel chromatography. The test can be conducted using a gel permeation chromatograph (GPC), such as a Polymer Char GPC-IR high temperature gel chromatograph. The test can be conducted with reference to the international standard ISO 16014-1-2019.

The thickness of the base film, the thickness of the separator, and the thickness of the heat resistant layer have meanings well known in the art, and can be measured using instruments and methods known in the art. An exemplary method for measuring the thickness of the separator is as follows: taking a sample of length 500mm × width 100mm; selecting 5 points uniformly on the sample (for example, selecting a point every 100mm along the length of the sample), measuring the separator thickness at the 5 different positions by a deci-micrometer thickness gauge, and taking the average value as the thickness of the separator. The length direction of the sample is parallel to the TD direction of the separator. The thickness of the base film can be measured with reference to the above-mentioned method. If one side of the separator is provided with a heat resistant layer, the thickness of the separator minus the thickness of the base film is the thickness of the heat resistant layer. If the two opposite surfaces of the separator are respectively provided with a heat resistant layer to be tested and a heat resistant layer on the opposite side of the heat resistant layer to be tested, the thickness of the separator minus the sum of the thickness of the base film and the thickness of the heat resistant layer on the opposite side is the thickness of the heat resistant layer to be tested.

The porosity of the base film has a meaning well known in the art, and can be measured using instruments and methods known in the art. An exemplary test method is as follows: taking 5 base film samples of 100mm×100mm, measuring weight respectively and taking the average value as the base film weight M (mg), and calculating the porosity X of the base film according to the calculation formula $X=[1-M/(T\times S\times \rho)]\times 100\%$, wherein T is the thickness of the base film, S is the area of the base film, and $\rho$ is the density of the polymer in the base film formulation.

The peel strength between the heat resistant layer and the base film has a meaning well known in the art, and

can be measured using instruments and methods known in the art. An exemplary test method is as follows: bonding a green glue to the surface of the heat resistant layer of the separator; then cutting to a width w of 15mm; peeling the heat resistant layer and the base film at 50mm/min by 180°; reading a maximum tensile force $x$(N) from a data graph of tensile force and displacement, and calculating in accordance with $F'=x/w$ to obtain the peel strength F' (N/m) between the heat resistant layer and the base film. The tensile apparatus may be a tensile machine from GOTECH Testing Machines Inc., such as model AI-3000-S.

Fig. 1 shows an example of separator. The separator includes a base film 10 and a heat resistant layer 20 laminated on either surface of the base film 10. As shown in Fig. 1-Fig. 3, the base film 10 is a microporous porous film. The heat resistant layer 20 is a microporous porous film layer comprising heat resistant particles. The separator of Fig. 1 is merely exemplary. For example, in other examples, the separator may include a base film 10 and heat resistant layers 20 laminated on both surfaces of the base film 10 opposite in the thickness direction.

The present application further provides a method for preparing a separator. The separator described in the present application can be prepared according to the preparation method. The preparation method comprises steps (a)~(f).

(a) providing a molten base film formulation comprising a polymer and a pore-forming agent.
(b) extruding the base film formulation and cooling to form a sheet.
(c) stretching the sheet in MD direction.
(d) stretching the sheet in TD direction.
(e) removing the pore-forming agent from the sheet to form a porous sheet.
(f) heat-setting the porous sheet to obtain a base film.

In some embodiments, the polymer of step (a) may be selected from those as described herein, for example from polyethylene-based polymers. The pore-forming agent may be a substance known in the art for forming a porous structure of a polymer film, such as paraffinic oil. In some examples, the weight ratio of the polymer to the pore-forming agent may be selected to be 20:80~60:40, and further optionally 35:75~50:50 or 30:70~40:60. As an example, a polymer can be blended with a paraffinic oil to form a molten base film formulation. The temperature of blending may be 180°C~250°C, and optionally 190°C~245°C. Thus, the polymer and the pore-forming agent can be sufficiently and uniformly mixed. The blending can be conducted in a device known in the art, such as an extruder, and further as a twin-screw extruder.

In some embodiments, in step (b), the molten base film formulation can be extruded through a forming die and cast onto a cooling roller in a sheet form, so as to form a sheet after cooling. The temperature of cooling may be selected to be 15°C~30°C, and further optionally 15°C~25°C, or 20°C~25°C. Since the cooling temperature is relatively low, the polymer can be cooled rapidly, whereby the crystallinity of the base film can be reduced, thereby increasing the elongation.

As an example, the molten base film formulation is uniformly extruded through a double flow channel cross-die head after passing through a gear pump and a filter of the extruder. The extruded base film formulation is cast vertically onto a cooling roller of a casting unit, and cooled to form a sheet. The cooling roller may be cooled by freezing with pure water to achieve a desired cooling temperature.

The stretching in MD direction in step (c) may be conducted using methods and devices known in the art. Examples include a longitudinal tensile machine. In some embodiments, the stretching ratio of the stretching in MD direction is 3~6 times, and optionally 3~5 times, 3-4.5 times, 3.5-4.5 times, 3-4 times, or 4-5 times. The stretching ratio in MD direction is in an appropriate range, which can reduce the degree of orientation of the base film in MD direction and increase the elongation of the base film while ensuring the strength of the base film. The stretching in MD direction in step (c) may be conducted at a temperature of 90°C~120°C.

In some embodiments, the sheet thickness after stretching in MD direction may be 0.3mm ± 0.1mm. In this way, a base film with a relatively small thickness can be obtained.

The stretching in TD direction in step (d) may be conducted using methods and devices known in the art. Examples include a transversel tensile machine. As an example, the sheet is passed into a first transversel tensile machine (TDO1) and stretched in TD direction. The first transversel tensile machine may comprise three zones of preheating, stretching and setting. The temperature of stretching in TD direction in step (d) may be set at 90°C~120°C.

In some embodiments, the stretching ratio of the stretching in TD direction in step (d) is 3~6 times, and optionally 3~5 times, 3~4.5 times, 3.5~4.5 times, 3.5~5 times, or 4~5 times, etc.

In some embodiments, in the preparation method of the present application, the stretching in MD direction in step (c) is carried out first, followed by the stretching in TD direction in step (d). This can better improve the strength and elongation of the base film.

In step (e), the pore-forming agent can be removed from the sheet by methods known in the art to form a porous sheet. For example, the pore-forming agent is removed by extracting with an extractant. Examples of extractant include dichloromethane. The extraction may be conducted in a device known in the art. As a specific example, the sheet may

be drawn to an extraction section having an internal circulation extraction means, with internal circulation extraction, the film is backwashed in the extractant, and the extractant is utilized to completely remove the pore-forming agent from the sheet. The sheet treated by extraction is dried to obtain a porous sheet. Drying may be conducted in a device known in the art, such as a drying oven.

In some embodiments, step (e) may be conducted after step (c) and step (d). This can better improve the strength and elongation of the base film.

In some embodiments, the heat-setting step (f) may comprise heat-setting the porous sheet at a temperature of 130°C or higher. Optionally, the heat-setting temperature is 130°C~150°C, and further optionally is 134°C~145°C. The degree of orientation of the base film in TD direction increases after stretching in TD direction. The heat-setting temperature is in an appropriate range, which can appropriately reduce the degree of orientation of the base film in TD direction, thereby increasing the elongation of the base film.

In step (f), the porous sheet can be heat-set using methods devices known in the art. Examples include a transversel tensile machine. As an example, the porous sheet can be drawn into a second transverse tensile machine (TDO2) for heat-setting. The second transversel tensile machine may comprise three zones of preheating, stretching and setting. During heat-setting, the sheet can be stretched in TD direction to ensure its tension. Optionally, the stretching ratio in TD direction is 1~1.2 or 1.05~1.15.

After the heat-setting treatment, the resulting base film can be rolled up for later use. The base film can be used as a separator. In some embodiments, the base film may further be post-treated and then used as a separator. For example, a heat insulation layer is formed on the base film. In this way, a heat resistant separator having better piercing resistance against foreign particles can be obtained. In these embodiments, the method for preparing a separator may further comprise step (g) of forming a heat resistant layer on at least one surface of the base film. As an example, the heat resistant layer may be formed on either or both surfaces of the base film in the direction of its own thickness.

In step (g), the heat resistant layer may be formed by coating at least one surface of the base film with a slurry comprising heat resistant particles and drying. The heat resistant particles can be selected from those as described herein. The solvent of the slurry may be one or more of an aqueous solvent (such as deionized water, etc.) and an organic solvent (such as N-methyl pyrrolidone NMP, dimethylacetamide DMAC, acetone, etc.). The slurry may further contain a binder. The binder can be selected from those as described herein. The slurry may be coated by any one or more of gravure coating (such as micro-gravure coating), dip coating, blade coating, wire bar coating, spray coating, and electrostatic spinning.

The present application further provides an electrochemical device. The electrochemical device includes any one or more types of separators of the present application. Therefore, the electrochemical device can have relatively high safety performance.

The electrochemical device of the present application can be any device capable of generating an electrochemical reaction and using the separator, which can be conceived by those skilled in the art. For example, the electrochemical device can be a primary battery, a secondary battery, a fuel cell, a solar cell, or a capacitor, etc. In particular, the electrochemical device of the present application is a secondary battery. Examples of secondary battery include, but are not limited to, a lithium-ion secondary battery, a sodium-ion secondary battery, a potassium-ion secondary battery, a magnesium-ion secondary battery, and the like.

## Secondary battery

The secondary battery includes a positive electrode sheet, a negative electrode sheet, the separator, and an electrolyte. During charging and discharging of the secondary battery, active ions are intercalated and deintercalated back and forth between the positive electrode sheet and the negative electrode sheet. The electrolyte serves to conduct ions between the positive electrode sheet and the negative electrode sheet. The separator is provided between the positive electrode sheet and the negative electrode sheet, and functions to separate.

### [Positive electrode sheet]

The positive electrode sheet includes a positive electrode current collector and a positive electrode film layer provided on the positive electrode current collector. As an example, the positive electrode current collector has two opposite surfaces in the direction of its own thickness, and the positive electrode film layer is laminated on either or both of the two opposite surfaces of the positive electrode current collector.

The positive electrode film layer typically comprises a positive electrode active material, optionally a binder and optionally a conductive agent. A positive electrode slurry is generally formed by dispersing the positive electrode active material, optionally the conductive agent and optionally the binder, etc. in a solvent and uniformly stirring, and is dried and cold-pressed to form the positive electrode film layer. The solvent may be N- methylpyrrolidone (NMP).

The positive electrode active material may be selected from active materials known in the art useful for positive

electrodes of secondary batteries. As an example, the positive electrode active material may include one or more of a lithium transition metal oxide and a polyanionic positive electrode material. Examples of lithium transition metal oxides may include one or more of lithium cobalt oxide (such as $LiCoO_2$), lithium-nickel oxide (such as $LiNiO_2$), layered lithium-manganese oxide (such as $LiMnO_2$), lithium-nickel-cobalt-manganese oxide (such as $LiNi_aCo_bMn_{1-a-b}O_2$), lithium-nickel-cobalt-aluminum oxide (such as $LiNi_aCo_bAl_{1-a-b}O_2$), lithium-nickel-cobalt oxide (such as $LiNi_yCo_{1-y}O_2$), layered lithium-cobalt-manganese oxide (such as $LiCo_yMn_{1-y}O_2$), lithium-cobalt-aluminum oxide (such as $LiCo_yAl_{1-y}O_2$), lithium-cobalt-boron oxide (such as $LiCo_yB_{1-y}O_2$), lithium-cobalt-magnesium oxide (such as $LiCo_yMg_{1-y}O_2$), lithium-cobalt-titanium oxide (such as $LiCo_yTi_{1-y}O_2$), lithium-cobalt-molybdenum oxide (such as $LiCo_yMo_{1-y}O_2$), lithium-cobalt-tin oxide (such as $LiCo_ySn_{1-y}O_2$), lithium-cobalt-calcium oxide (such as $LiCo_yCa_{1-y}O_2$), lithium-cobalt-copper oxide (such as $LiCo_yCu_{1-y}O_2$), lithium-cobalt-vanadium oxide (such as $LiCo_yV_{1-y}O_2$), lithium-cobalt-zirconium oxide (such as $LiCo_yZr_{1-y}O_2$), lithium-cobalt-silicon oxide (such as $LiCo_ySi_{1-y}O_2$), lithium-cobalt-tungsten oxide (such as $LiCo_yW_{1-y}O_2$), lithium-cobalt-yttrium oxide (such as $LiCo_yY_{1-y}O_2$), lithium-cobalt-lanthanum oxide (such as $LiCo_yLa_{1-y}O_2$), layered lithium-nickel-manganese oxide (such as $LiNi_yMn_{1-y}O_2$), spinel lithium-manganese oxide (such as $LiMn_2O_4$), spinel lithium-nickel-manganese oxide (such as $LiNi_{0.5}Mn_{1.5}O_4$) and modified materials of the above substances. Examples of the polyanionic positive electrode materials may include one or more selected from lithium iron phosphate (such as $LiFePO_4$), lithium manganese phosphate (such as $LiMnPO_4$), lithium cobalt phosphate (such as $LiCoPO_4$), lithium nickel phosphate (such as $LiNiPO_4$), lithium iron manganese phosphate (such as $LiFe_yMn_{1-y}PO_4$), and modified materials of the above substances. The aforementioned modified materials may be coating modified and/or doping modified materials. When present, a represents $0 < a < 1$, and b represents $0 < b < 1$. When present, y independently represents $0 < y < 1$.

The binder can stably bond the positive electrode active material and optionally the conductive agent to the positive electrode current collector. In some examples, the binder of the positive electrode film layer may be selected from one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and modified polymers of the above substances.

The conductive agent can improve the electronic conductivity of the positive electrode film layer. In some examples, the conductive agent of the positive electrode film layer may be selected from one or more of superconducting carbon, carbon black (such as Super P, acetylene black, ketjen black), carbon dot, carbon nanotube, graphene, and carbon nanofiber.

The positive electrode current collector can be made of a material having good electrical conductivity and mechanical strength to provide electrical conductivity and current collection. As an example, the positive electrode current collector can be made of an aluminum foil, a nickel foil, or a metal foil formed by the combination of the two.

[Negative electrode sheet]

In some embodiments, the negative electrode sheet includes a negative electrode current collector and a negative electrode film layer provided on at least one surface of the negative electrode current collector. As an example, the negative electrode current collector has two opposite surfaces in the direction of its own thickness, and the negative electrode film layer is laminated on either or both of the two opposite surfaces of the negative electrode current collector.

The negative electrode film layer typically comprises a negative electrode active material, optionally a binder, optionally a conductive agent and optionally other adjuvant. A negative electrode slurry is generally formed by dispersing the negative electrode active material, optionally the conductive agent, optionally the binder and optionally the adjuvant, etc. in a solvent and uniformly stirring, and is dried and cold-pressed to form the negative electrode film layer. The solvent may be N-methyl pyrrolidone (NMP) or deionized water.

The negative electrode active material may be selected from active materials known in the art useful for negative electrodes of secondary batteries. In some examples, the negative electrode active material may be selected from one or more of graphitic carbon materials (such as artificial graphite, natural graphite), non-graphitic carbon materials (such as hard carbon, etc.), metallic lithium, lithium alloys (such as Li-Mg alloy, Li-Cu-Sn alloy, etc.), elemental silicon, silicon-based alloys (such as Mg-Si alloy, etc.), silicon-based oxides (such as SiO, etc.), elemental tin, tin-based alloys (such as Sn-Sb alloy, etc.), tin-based oxides (such as SnO, $SnO_2$, etc.), other metal oxides (such as $Li_zFe_2O_3$, $Li_zWO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, etc.), conductive polymers (such as polyacetylene, polyaniline, polythiophene, etc.). When present, $0 < z < 1$. Optionally, the negative electrode active material includes one or more of artificial graphite and natural graphite.

The conductive agent can improve the electronic conductivity of the negative electrode film layer. In some examples, the conductive agent of the negative electrode film layer may be selected from one or more of superconducting carbon, carbon black (such as Super P, acetylene black, ketjen black, etc.), carbon dot, carbon nanotube, graphene, and carbon nanofiber.

The binder can stably bond the negative electrode active material and optionally the conductive agent to the negative electrode current collector. In some examples, the binder of the negative electrode film layer may be selected

from one or more of styrene butadiene rubber (SBR), water-based acrylic resin, polyvinyl alcohol (PVA), sodium alginate (SA), and carboxymethyl chitosan (CMCS).

In some examples, the other optional adjuvant is, for example, a thickener (such as sodium carboxymethyl cellulose CMC-Na), a PTC thermistor material, and the like.

The negative electrode current collector can be made of a material having good electrical conductivity and mechanical strength to provide electrical conductivity and current collection. In some examples, the negative electrode current collector can be made of a copper foil, a nickel foil, a stainless steel sheet, a titanium foil, and a metal foil formed by the combination of two or more of them.

In some embodiments, the negative electrode sheet can be made of a lithium-based metal sheet.

[Separator]

The separator may be selected from any one or more types of separators of the present application. In some embodiments, the separator of the present application may be selected for use in combination with other separators known in the art in the electrochemical device. The electrochemical device includes the separator of the present application, and thus can have the same or similar beneficial effects.

[Electrolyte]

The type of the electrolyte is not particularly limited in the present application, and can be selected according to requirements. For example, the electrolyte may be selected from a solid electrolyte (such as an inorganic solid electrolyte, a polymer solid electrolyte, an organic-inorganic composite solid electrolyte), or a liquid electrolyte (i.e. an electrolyte solution). In some embodiments, the electrolyte is selected from an electrolyte solution. The electrolyte solution comprises an electrolyte salt and a solvent.

The electrolyte salt can dissociate into anions and cations in the solvent. The cations may comprise one or more of lithium ions, sodium ions, potassium ions, and magnesium ions. The anions may comprise one or more of $PF_6^-$, $BF_4^-$, $Cl^-$, $Br^-$, $I^-$, $ClO_4^-$, $AsF_6^-$, bis-fluorosulfonimide anion $N(SO_2F)_2^-$, bis-trifluoromethane sulfonimide anion $N(CF_3SO_2)_2^-$, acetate anion $CH_3CO_2^-$, trifluoromethanesulfonate $CF_3SO_3^-$, difluorooxalato-borate anion (structural formula A1), dioxalato-borate anion (structural formula A2), difluorophosphate ion $PO_2F_2^-$, difluorodioxalato-phosphate anion (structural formula A3), tetrafluorooxalato-phosphate anion (structural formula A4).

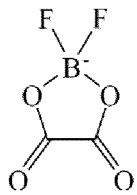 (A1) , 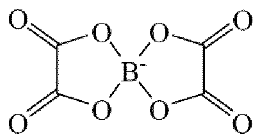 (A2)

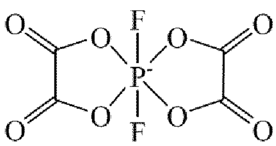 (A3) , 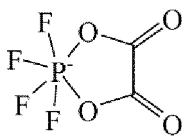 (A4)

In some examples, the electrolyte salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

The solvent may be an organic solvent. In some examples, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), dimethyl sulfoxide (DMSO), acetonitrile, tetrahydrofuran (THF) and N-methyl pyrrolidone (NMP).

In some examples, the electrolyte solution further optionally comprises an additive. For example, the additive

may include a negative electrode film-forming additive, or may include a positive electrode film-forming additive, and may further include an additive capable of improving certain performances of the battery, such as an additive for improving the overcharging performance of the battery, an additive for improving the high temperature performance of the battery, an additive for improving the low temperature performance of the battery, etc.

The positive electrode sheet, the negative electrode sheet and the separator can be made into an electrode assembly through a lamination process or a winding process, so that the separator is located between the positive electrode sheet and the negative electrode sheet and functions to separate; the electrode assembly is placed in an outer package, injected with the electrolyte solution and sealed to obtain the secondary battery. The separator in the electrode assembly at least includes one or more types of separators of the present application.

The outer package of the secondary battery is used to encapsulate the electrode assembly and the electrolyte. In some embodiments, the outer package of the secondary battery may be a hard case, such as a hard plastic case, an aluminium case, a steel case, and the like. The outer package of the secondary battery can also be a soft pack, such as a bag-type soft pack. The material of the soft pack can be a plastic, such as one or more of polypropylene (PP), polybutylene terephthalate (PBT), polybutylene succinate (PBS), etc. may be included.

The shape of the secondary battery is not particularly limited in the present application, and may be cylindrical, square or of any other shapes. Fig. 4 is an example of secondary battery 5 having a square structure.

In some examples, referring to Fig. 5, the outer package can include a case 51 and a cover plate 53. The case 51 can include a bottom plate and a side plate connected to the bottom plate, with the bottom plate and the side plate enclosing to form an accommodating cavity. The case 51 has an opening that communicates with the accommodating cavity, and the cover plate 53 can cover the opening to close the accommodating cavity. The electrode assembly 52 is encapsulated in the accommodating cavity. The electrolyte solution impregnates the electrode assembly 52. The number of electrode assemblies 52 contained in the secondary battery 5 can be one or more, and can be adjusted according to requirements.

The present application further provides an electrochemical apparatus. The electrochemical apparatus includes any one or more types of electrochemical devices of the present application. Therefore, the electrochemical apparatus also has the same or similar beneficial effects as the electrochemical device, such as relatively high safety performance.

In some examples, the electrochemical apparatus may include a plurality of electrochemical devices. The specific number of the electrochemical devices contained in the electrochemical apparatus can be adjusted according to the application and capacity of the electrochemical apparatus. Furthermore, according to different application requirements, the plurality of electrochemical devices can be connected in series connection, in parallel connection or in series-parallel hybrid connection.

In some examples, the electrochemical apparatus may be a battery group. Examples of a battery group include a battery module, a battery pack, and the like. The battery module may be assembled from a plurality of secondary batteries. The specific number of the secondary batteries contained in the battery module can be adjusted according to the application and capacity of the battery module. The battery pack may be assembled from a plurality of secondary batteries or a plurality of battery modules. The number of the secondary batteries or battery modules contained in the battery pack can be adjusted according to the application and capacity of the battery pack.

Fig. 6 is an example of battery module 4. Referring to Fig. 6, in the battery module 4, a plurality of secondary batteries 5 can be sequentially arranged along the length direction of the battery module 4. Of course, any other arrangement is also possible. The plurality of secondary batteries 5 may further be fixed by fasteners. Optionally, the battery module 4 can further include a case having an accommodating space, to accommodate the plurality of secondary batteries 5.

Figs. 7 and 8 are an example of battery pack 1. Referring to Figs. 7 and 8, the battery pack 1 can include a battery box and a plurality of battery modules 4 provided in the battery box. The battery box includes an upper box 2 and a lower box 3, wherein the upper box 2 can cover the lower box 3, and forms an enclosed space for accommodating the battery module 4. The plurality of battery modules 4 can be arranged in the battery box according to any manner.

The present application further provides a powered device including at least one of the electrochemical device or electrochemical apparatus of the present application. The electrochemical device or electrochemical apparatus can be used as a power source for the powered device, or can be used as an energy storage unit for the powered device. In some examples, the powered device can include at least one of the secondary battery, the battery module, or the battery pack of the present application. The selection may be based on the actual usage requirements of the powered device. The powered device may include a mobile device (such as a mobile phone, a laptop, etc.), an electric vehicle (such as an all-electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but are not limited thereto.

Fig. 9 is an example of powered device. The device is a all-electric vehicle, a hybrid electric vehicle, or a plug-in hybrid electric vehicle, etc. The powered device can use the battery pack or the battery module as a power source.

As another example, the powered device may be a mobile phone, a tablet computer, a laptop, etc. The powered

device can use the secondary battery as a power source.

## Examples

The following examples describe more specifically the disclosure of the present application, and these examples are only used for illustrative purposes, as various modifications and changes within the scope of the disclosure of the present application are obvious to those skilled in the art. Unless otherwise stated, all parts, percentages, and ratios reported in the following examples are on a weight basis, and all reagents used in the examples are commercially available or can be obtained by synthesis according to conventional methods, and can be directly used without further treatment, and the instruments used in the examples are commercially available.

### Example 1

Preparation of separator

Preparation of base film: a PE with a weight average molecular weight of 2,000,000 and a crystallinity of 53% (i.e. a first polyethylene), a PE with a weight average molecular weight of 600,000 and a crystallinity of 50% (i.e. a second polyethylene) were mixed with a paraffinic oil in a weight ratio of 2:1:7 and extruded; a sheet-like film was extruded through a T-shaped die at a high temperature and cast to a cooling roller at 20°C for cooling, stretched in MD direction, and then stretched in TD direction, extracted to remove the paraffinic oil, and then heat-set and slitted to obtain the base film. The stretching ratio in MD direction is 4, and the stretching temperature is 114°C; the thickness of the sheet after stretching in MD direction is 0.3mm; the stretching ratio in TD direction is 4.4, the stretching temperature is 116°C, and the heat-setting temperature is 135°C.

The resulting base film had a force value $F_M$ at tensile break in MD direction of 17.79N, a tensile displacement $\Delta L_M$ at tensile break in MD direction of 98mm, a tensile energy $C_M$ per unit thickness in MD direction of 2.49J/10$\mu$m, and an elongation $\delta_M$ in MD direction of 245%. The resulting base film had a force value $F_T$ at tensile break in TD direction of 16.13N, a tensile displacement $\Delta L_T$ at tensile break in TD direction of 78mm, a tensile energy $C_T$ per unit thickness in TD direction of 1.8J/10$\mu$m, and an elongation $\delta_T$ in TD direction of 195%. The porosity of the base film was 30%. The thickness d of the base film was 7$\mu$m.

Preparation of heat resistant layer: 97 parts by weight of alumina particles and 3 parts by weight of a polyacrylate binder were added to deionized water and mixed uniformly to obtain a slurry; and then the slurry was uniformly coated onto any one surface of the base film in the direction of its own thickness by means of micro-gravure coating; and after oven drying, the heat resistant layer was obtained. The thickness of the heat resistant layer was 3$\mu$m.

Preparation of positive electrode sheet

94 parts by weight of a positive electrode active material lithium cobalt oxide (also referred to as lithium cobaltate), 3 parts by weight of a conductive carbon and 3 parts by weight of a binder PVDF were added to a solvent NMP, stirred and mixed uniformly, and then coated onto the surface of an Al foil, oven dried, cold-pressed, and striped to obtain the positive electrode sheet.

Preparation of negative electrode sheet

97.5 parts by weight of a negative electrode active material artificial graphite, 1.5 parts by weight of a binder SBR and 1 part by weight of a thickener CMC-Na were added to deionized water, stirred and mixed uniformly, and then coated onto the surface of a Cu foil, oven dried, cold-pressed, and striped to obtain the negative electrode sheet.

Preparation of electrolyte solution

11.9 parts by weight of lithium hexafluorophosphate was added to 88.1 parts by weight of a solution of PC, EC and DEC (in a mass ratio of 1:1:1), and after uniformly stirring to fully dissolve, the electrolyte solution was obtained.

Preparation of lithium-ion secondary battery

The above-mentioned positive electrode sheet, separator and negative electrode sheet were stacked in sequence, so that the separator was located between the positive electrode sheet and the negative electrode sheet and functioned to separate, and a bare battery cell was obtained by winding. The bare battery cell was placed in an outer package, injected with the electrolyte solution and encapsulated, and after formation, the lithium-ion secondary battery

was obtained.

Examples 2~6 and Comparative Examples 1~2: The preparation method was similar to that of Example 1, except that the relevant parameters in the preparation steps of the separator were adjusted, see Table 1 for details. In Table 1, the weight ratio was the weight of the first polyethylene : the weight of the second polyethylene : the weight of the pore-forming agent paraffinic oil.

Examples 7~28: The preparation method was similar to that of Example 3, except that the relevant parameters in the preparation steps of the heat resistant layer of the separator were adjusted, see Table 4 for details.

Comparative Examples 3~7: The preparation method was similar to that of Comparative Example 1, except that the relevant parameters in the preparation steps of the heat resistant layer of the separator were adjusted, see Table 4 for details.

**Test section**

(1) Self-discharge test of secondary battery

1,000 secondary batteries prepared above were charged at normal temperature (25°C) at a constant current of 0.5C rate to 4.4V, and then charged at a constant voltage to 0.05C; and then discharged at a constant current of 0.5C to 3.9V; after standing at normal temperature for 48h, the open-circuit voltage $V_1$ of the secondary battery was tested; and then after continuing to stand at normal temperature for 48h, the open-circuit voltage $V_2$ of the battery cell was tested; the self-discharge calculation formula was: $K=(V_1-V_2)/48$. A secondary battery with $K > 0.08$ was marked as self-discharge unqualified product. The self-discharge unqualification ratio was calculated by the ratio of the number of self-discharge unqualified products to the total number of samples. A lower self-discharge unqualification ratio of the secondary battery indicates that the separator has a relatively high piercing resistance against foreign particles.

(2) Needle piercing test of secondary battery

10 secondary batteries prepared above were charged at room temperature at a constant current of 1A current to the charging termination voltage specified in the enterprise's technical conditions (4.4V in the test of this example), and at this time, the charging was changed to a constant voltage charging, and the charging was stopped when the charging current dropped to 0.05A; after charging, the batteries were left aside for 1h. A high temperature resistant steel needle with a diameter of 5mm was used to pierce the electrode plate of the secondary battery at a speed of 25±5mm/s from a direction perpendicular to it, with the piercing position suitably close to the geometric center of the pierced surface, the steel needle was left in the secondary battery and observed for 1h. No explosion and no fire were considered as qualified. The qualification rate was calculated by the ratio of the number of qualified products to the total number of samples.

Table 1: Preparation parameters of separators

| No. | Polymer formulation | | | | Weigh t ratio | Preparation process parameters | | | | | |
|---|---|---|---|---|---|---|---|---|---|---|---|
| | First polyethylene | | Second polyethylene | | | Casting | Stretching in MD Direction | | Stretching in TD Direction | | Heat-setting |
| | Molecular weight M1 | Crysta llinity | Molecul ar weight M2 | Crystalli nity | | Temper ature of cooling roller °C | Stretching ratio | Tern perat ure °C | Stretc hing ratio | Temp eratur e °C | Temperatur e °C |
| Example 1 | 2,000,000 | 53 | 600,000 | 50 | 2:1:7 | 20 | 4.0 | 114 | 4.4 | 116 | 135 |
| Example 2 | 2,000,000 | 53 | 600,000 | 50 | 1:2:7 | 20 | 4.0 | 114 | 4.4 | 116 | 135 |
| Example 3 | 2,000,000 | 53 | 600,000 | 50 | 1:2:7 | 20 | 4.0 | 114 | 4.9 | 116 | 135 |
| Example 4 | 2,000,000 | 53 | 600,000 | 50 | 1:2:7 | 20 | 4.0 | 114 | 4.0 | 116 | 135 |
| Example 5 | 2,200,000 | 53 | 400,000 | 50 | 1.5:1.5:7 | 20 | 4.0 | 114 | 4.0 | 116 | 135 |
| Example 6 | 2,200,000 | 53 | 400,000 | 50 | 1:2:7 | 20 | 4.0 | 114 | 4.0 | 116 | 135 |
| Comparati ve Example 1 | / | / | 800,000 | 50 | 0:4:6 | 20 | 6.4 | 114 | 7.0 | 116 | 127 |
| Comparati ve Example 2 | 2,000,000 | 53 | 600,000 | 50 | 1:2:7 | 20 | 6.4 | 114 | 7.0 | 116 | 127 |

Table 2: Test results of separators

| No. | $F_M$ [N] | $\Delta L_M$ [m] | $C_M$[J/10μm] | $\delta_M$[%] | $F_T$ [N] | $\Delta L_T$ [m] | $C_T$ [J/10μm] | $\delta_T$ [%] | 130°C heat shrink age MD | 130°C heat shrink age TD | 150°C Needle hole expansi on rate |
|---|---|---|---|---|---|---|---|---|---|---|---|
| Example 1 | 17.79 | 0.098 | 2.49 | 245 | 16.13 | 0.078 | 1.80 | 195 | 2.5% | 3.0% | 2.3% |
| Example 2 | 1713 | 0.111 | 2.72 | 277.5 | 18.1 | 0.101 | 2.61 | 252.5 | 2.3% | 2.4% | 2.0% |
| Example 3 | 1713 | 0.111 | 2.72 | 277.5 | 21 | 0.079 | 2.37 | 197.5 | 2.3% | 2.5% | 2.1% |
| Example 4 | 1713 | 0.111 | 2.72 | 277.5 | 17.05 | 0.115 | 2.80 | 287.5 | 2.3% | 2.3% | 1.9% |
| Example 5 | 25.30 | 0.742 | 26.82 | 1855 | 25.7 | 0.757 | 27.79 | 1892.5 | 2.2% | 2.2% | 1.7% |
| Example 6 | 30.20 | 1.154 | 49.79 | 2885 | 30 | 1.166 | 49.97 | 2915 | 2.4% | 2.4% | 1.4% |
| Comparative Example 1 | 2012 | 0.043 | 1.24 | 107.5 | 21.56 | 004 | 1.23 | 100 | 7.6% | 8.5% | 9.4% |
| Comparative Example 2 | 22.23 | 0.041 | 1.30 | 102.5 | 23.41 | 0.039 | 1.30 | 97.5 | 7.3% | 8.1% | 8.2% |

It can be seen from the results in Table 2 that, in the separators of the examples of the present application, the base film has relatively high tensile energy per unit thickness in MD direction and tensile energy per unit thickness in TD direction, and the base film has relatively high elongation in MD direction and elongation in TD direction, thus the separator has relatively low shrinkage and hole expansion rate at a high temperature, thereby functioning well to separate the positive electrode from the negative electrode and improving the safety performance of the battery.

The separators of Comparative Example 1 and Comparative Example 2 have relatively low tensile energy per unit thickness in MD direction and tensile energy per unit thickness in TD direction, and the base films have relatively small elongation in MD direction and elongation in TD direction, so that the separators have relatively large shrinkage and hole expansion rate at a high temperature, which is not advantagous for the safety performance of the battery.

Table 3: Test results of secondary batteries

| No. | Ratio of self- discharge defective products | Qualification rate of needle piercing test |
|---|---|---|
| Example 1 | 4.2% | 100% |
| Example 2 | 1.1% | 100% |
| Example 3 | 1.2% | 100% |
| Example 4 | 1.0% | 100% |
| Example 5 | 1.0% | 100% |
| Example 6 | 1.4% | 100% |
| Comparative Example 1 | 2.0% | 40% |
| Comparative Example 2 | 1.9% | 50% |

It can be seen from the results in Table 3 that, in the separators of the examples of the present application, the base film has relatively high tensile energy per unit thickness in MD direction and tensile energy per unit thickness in TD direction, and the base film has relatively high elongation in MD direction and elongation in TD direction, thus the separator can effectively inhibit piercing by particles, and especially in the extreme cases such as needle piercing, the damage area of the separator is relatively small, thus the risk of thermal runaway of the battery is reduced. Therefore, the secondary battery using the separator of the present application can balance relatively low ratio of self-discharge defective products and relatively high qualification rate of needle piercing test at the same time, thereby obtaining a relatively high safety performance.

The separators of Comparative Example 1 and Comparative Example 2 have relatively low tensile energy per unit thickness in MD direction and tensile energy per unit thickness in TD direction, and the base films have relatively small elongation in MD direction and elongation in TD direction, thus the safety performance of a battery using the same is poor.

Table 4: Preparation parameters of separators

| No. | Preparation parameters of heat resistant layer | | | |
|---|---|---|---|---|
| | Types of heat resistant particles | Mass proportion of heat resistant particles in heat resistant layer | Coating form of heat resistant layer | Thickness of heat resistant layer [μm] |
| Example 3 | Alumina | 97 | Coated on one side | 3 |
| Example 7 | Boehmite | 97 | Coated on one side | 3 |
| Example 8 | Barium sulfate | 97 | Coated on one side | 3 |
| Example 9 | Titanium dioxide | 97 | Coated on one side | 3 |
| Example 10 | Magnesium hydroxide | 97 | Coated on one side | 3 |
| Example 11 | Alumina | 97 | Coated on one side | 0.1 |
| Example 12 | Alumina | 97 | Coated on one side | 1 |
| Example 13 | Alumina | 97 | Coated on one side | 2 |

(continued)

| No. | Preparation parameters of heat resistant layer | | | |
|---|---|---|---|---|
| | Types of heat resistant particles | Mass proportion of heat resistant particles in heat resistant layer | Coating form of heat resistant layer | Thickness of heat resistant layer [μm] |
| Example 14 | Alumina | 97 | Coated on one side | 4 |
| Example 15 | Alumina | 97 | Coated on one side | 5 |
| Example 16 | Alumina | 97 | Coated on one side | 10 |
| Example 17 | Alumina | 97 | Coated on both sides | 0.1 |
| Example 18 | Alumina | 97 | Coated on both sides | 1 |
| Example 19 | Alumina | 97 | Coated on both sides | 2 |
| Example 20 | Alumina | 97 | Coated on both sides | 3 |
| Example 21 | Alumina | 97 | Coated on both sides | 4 |
| Example 22 | Alumina | 97 | Coated on both sides | 5 |
| Example 23 | Alumina | 97 | Coated on both sides | 10 |
| Example 24 | Alumina | 40 | Coated on one side | 3 |
| Example 25 | Alumina | 60 | Coated on one side | 3 |
| Example 26 | Alumina | 80 | Coated on one side | 3 |
| Example 27 | Alumina | 90 | Coated on one side | 3 |
| Example 28 | Alumina | 99 | Coated on one side | 3 |
| Comparative Example 1 | Alumina | 97 | Coated on one side | 3 |
| Comparative Example 3 | Alumina | 40 | Coated on one side | 3 |
| Comparative Example 4 | Alumina | 60 | Coated on one side | 3 |
| Comparative Example 5 | Alumina | 80 | Coated on one side | 3 |
| Comparative Example 6 | Alumina | 90 | Coated on one side | 3 |
| Comparative Example 7 | Alumina | 99 | Coated on one side | 3 |

The thickness of the heat resistant layer in Table 4 refers to the thickness of the heat resistant layer on one side. For the separator coated with heat resistant layer on both sides, the thickness of the heat resistant layer on the surface of each side is equal.

Table 5: Test results of separators and secondary batteries

| No. | Separator | | | | Battery | |
|---|---|---|---|---|---|---|
| | Peel strength between base film and heat resistant layer [N/m] | 130°C Heat shrinkage-MD | 130°C Heat shrinkage-TD | 150°C Needle hole expansion rate | Ratio of self-discharge defective products | Qualification rate of needle piercing test |
| Example 3 | 20 | 2.3% | 2.5% | 2.1% | 1.20% | 100% |
| Example 7 | 18 | 2.1% | 2.3% | 2.2% | 1.00% | 100% |
| Example 8 | 22 | 2.3% | 2.5% | 3.4% | 0.90% | 100% |
| Example 9 | 21 | 2.2% | 2.4% | 3.1% | 0.95% | 100% |
| Example 10 | 19 | 2.4% | 2.6% | 4.2% | 0.96% | 100% |
| Example 11 | 20 | 6.0% | 6.2% | 5.1% | 2.30% | 100% |
| Example 12 | 20 | 4.1% | 4.3% | 4.3% | 2.10% | 100% |
| Example 13 | 20 | 3.0% | 3.2% | 3.2% | 1.50% | 100% |
| Example 14 | 20 | 1.5% | 1.7% | 1.9% | 0.80% | 100% |
| Example 15 | 20 | 1.1% | 1.2% | 1.5% | 0.50% | 100% |
| Example 16 | 20 | 0.4% | 0.5% | 0.9% | 0.10% | 100% |
| Example 17 | 20 | 5.1% | 5.3% | 2.9% | 2.10% | 100% |
| Example 18 | 20 | 3.0% | 3.2% | 2.0% | 1.80% | 100% |
| Example 19 | 20 | 1.5% | 1.7% | 1.8% | 1.00% | 100% |
| Example 20 | 20 | 1.4% | 1.6% | 0.9% | 0.40% | 100% |
| Example 21 | 20 | 0.8% | 0.9% | 0.7% | 0.20% | 100% |
| Example 22 | 20 | 0.3% | 0.4% | 0.6% | 0.10% | 100% |
| Example 23 | 20 | 0.1% | 0.2% | 0.1% | 0.01% | 100% |
| Example 24 | 200 | 11.3% | 12.0% | 6.1% | 2.10% | 100% |
| Example 25 | 150 | 7.0% | 7.2% | 5.4% | 1.30% | 100% |
| Example 26 | 120 | 2.8% | 3.0% | 5.4% | 0.95% | 100% |
| Example 27 | 100 | 2.5% | 2.7% | 4.5% | 0.90% | 100% |
| Example 28 | 10 | 2.0% | 2.2% | 2.5% | 1.20% | 100% |
| Comparative Example 1 | 15 | 7.6% | 8.5% | 9.4% | 2.00% | 40% |
| Comparative Example 3 | 180 | 23.0% | 24.0% | 17.5% | 3.70% | 0 |
| Comparative Example 4 | 140 | 14.0% | 15.0% | 15.5% | 2.70% | 20% |
| Comparative Example 5 | 100 | 5.6% | 6.0% | 13.8% | 2.55% | 20% |
| Comparative Example 6 | 80 | 5.2% | 5.6% | 11.7% | 2.30% | 30% |
| Comparative Example 7 | 5 | 5.3% | 6.7% | 9.4% | 5.00% | 40% |

It can be seen from the results in Table 5 that, the optimized design of the heat resistant layer can further

improve the performance of the separator, and thus improve the safety performance of the battery.

In particular, it can be seen from a comparison of Examples 3 and 7-10 that, the selection of appropriate heat resistant particles for the heat resistant layer helps to provide the separator with a relatively low heat shrinkage and needle hole expansion rate, and in particular to provide the battery with a relatively low self-discharge probability and a relatively high safety performance against needle piercing.

It can be seen from a comparison of Examples 3 and 11-16 as well as a comparison of Examples 17-23 that, when the thickness of the heat resistant layer is in an appropriate range, it is possible to further reduce the heat shrinkage and the needle hole expansion rate of the separator while ensuring that the separator has a relatively small thickness, and to further reduce the self-discharge probability of the battery and to improve the safety performance against needle piercing.

It can be seen from a comparison of Examples 3 and 24-28 as well as a comparison of Comparative Examples 1 and 3-6 that, the heat resistant layer has an appropriate proportion of heat resistant particles, which is helpful to further reduce the heat shrinkage and the needle hole expansion rate of the separator, and to further reduce the self-discharge probability of the battery and to improve the safety performance against needle piercing. Moreover, a separator with a base film satisfying that the tensile energy per unit thickness in MD direction and the tensile energy per unit thickness in TD direction as well as the elongation in MD direction and the elongation in TD direction are within appropriate ranges has a better performance, and the safety performance of a secondary battery using the same is higher.

The above descriptions are only specific embodiments of the present application, however, the scope of the present application is not limited thereto, and any one of those skilled in the art can readily conceive of various equivalent modifications or substitutions within the technical scope disclosed in the present application, and these modifications or substitutions shall be encompassed within the scope of the present application. Therefore, the scope of the present application shall be determined with reference to the scope of the claims.

## Claims

**1.** A separator, comprising a base film,

the base film has a tensile energy per unit thickness of ≥1.8J/10μm in both longitudinal MD direction and transverse TD direction, and an elongation of ≥150% in both MD direction and TD direction;

wherein, the tensile energy per unit thickness is $\frac{F \times \Delta L}{d} \times 10$,

F represents a force value in N at which a test sample of the base film with a gauge length of 40mm and a width of 15mm is stretched to break at a constant rate of 50mm/min, ΔL represents a tensile displacement in m at which the test sample is stretched to break, and d represents an initial thickness in μm of the test sample;

the thickness of the base film is 2μm~40μm.

**2.** The separator according to claim 1, wherein the base film has a tensile energy per unit thickness in MD direction of 1.8J/10μm~50J/10μm, optionally 2.4J/10μm~50J/10μm, and further optionally 2.7J/10μm~30J/10μm; and/or, the base film has a tensile energy per unit thickness in TD direction of 1.8J/10μm~50J/10μm, optionally 2J/10μm~50J/10μm, and further optionally 2.5J/10μm-30J/10μm.

**3.** The separator according to claim 1 or 2, wherein the base film has an elongation in MD direction of 150%~4000%, optionally 180%~4000%, and further optionally 200%~2000%; and/or,
the base film has an elongation in TD direction of 150%~4000%, optionally 180%~4000%, and further optionally 200%~2000%.

**4.** The separator according to any one of claims 1-3, wherein the base film is a polymeric base film, and the mass proportion of polyethylene-based polymer in the base film is 50% or more, optionally 80% or more, and further optionally 100%, based on the total mass of polymers in the base film formulation;
wherein the polyethylene-based polymer comprises one or more of polyethylene, copolymer of ethylene and α-olefin, and optionally, the α-olefin is selected from one or more of propylene, 1-butene and 1-octene.

**5.** The separator according to claim 4, wherein the base film comprises two or more polyethylene-based polymers, satisfying: 1 < M1/M2≤50, optionally 2≤M1/M2≤30, and further optionally 3≤M1/M2≤10, wherein M1 represents the weight average molecular weight of the polyethylene-based polymer having the largest weight average molecular weight in the base film formulation, and M2 represents the weight average molecular weight of the polyethylene-based polymer having the smallest weight average molecular weight in the base film formulation.

**6.** The separator according to claim 5, wherein M1 is 1,100,000~5,000,000, and optionally 1,500,000~3,000,000; and/or M2 is 100,000~1,000,000, and optionally 300,000~1,000,000.

**7.** The separator according to any one of claims 4-6, wherein the mass proportion of the polyethylene-based polymer having the largest weight average molecular weight in the base film is 10%~100%, optionally 10%~90%, and further optionally 30%~70%, based on the total mass of polymers in the base film formulation; and/or,
the mass proportion of the polyethylene-based polymer having the smallest weight average molecular weight in the base film is 0-90%, optionally 10%~90%, and further optionally 30%~70%, based on the total mass of polymers in the base film formulation.

**8.** The separator according to any one of claims 4-7, wherein the polyethylene-based polymer has a crystallinity of ≤65%, optionally ≤50%, and further optionally ≤45%.

**9.** The separator according to any one of claims 1-8, wherein the thickness of the base film is 2μm~20μm, optionally 3μm~15μm, and further optionally 3μm-10μm.

**10.** The separator according to any one of claims 1-9, further comprising a heat resistant layer located on at least one surface of the base film.

**11.** The separator according to claim 10, wherein the heat resistant layer comprises heat resistant particles, the mass proportion of which in the heat resistant layer is ≥40%, optionally is 40%~99%, and further optionally is 80%~97%;

optionally, the heat resistant particles comprise one or more of inorganic heat resistant particles and organic heat resistant particles, wherein,
the inorganic heat resistant particles are optionally selected from one or more of alumina, silicon oxide, titanium oxide, calcium carbonate, magnesium oxide, magnesium hydroxide, boehmite, barium titanate, and barium sulfate;
the organic heat resistant particles are optionally selected from one or more of polyacrylic resin, aramid, polyphenylene sulfide, polymethyl methacrylate, polyvinylidene fluoride, polytetrafluoroethylene, and polyvinylidene fluoride-hexafluoropropylene copolymer.

**12.** The separator according to any one of claims 10-11, wherein the thickness of the heat resistant layer is ≥0.1mm, optionally is 0.1mm~10mm, and further optionally is 1mm~3mm.

**13.** The separator according to any one of claims 10-12, wherein the peel strength between the heat resistant layer and the base film is ≥10N/m, optionally is 15N/m~200N/m, and further optionally is 20N/m~200N/m.

**14.** The separator according to any one of claims 1-13, wherein the separator satisfies:

$(l_{M0}-l_M)/l_{M0}\times 100\% \leq 30\%$, optionally $(l_{M0}-l_M)/l_{M0}\times 100\% \leq 10\%$, and further optionally $(l_{M0}-l_M)/l_{M0}\times 100\% \leq 5\%$, wherein $l_M$ represents a length in mm in MD direction of a test sample of the separator with a length $l_{M0}$ in MD direction of 100mm and a length $l_{T0}$ in TD direction of 100mm after being held at 130°C for 1h; and/or,
$(l_{T0}-l_T)/l_{T0}\times 100\% \leq 30\%$, optionally $(l_{T0}-l_T)/l_{T0}\times 100\% \leq 10\%$, and further optionally $(l_{T0}-l_T)/l_{T0}\times 100\% \leq 5\%$, wherein $l_T$ represents a length in mm in TD direction of a test sample of the separator with a length $l_{M0}$ in MD direction of 100mm and a length $l_{T0}$ in TD direction of 100mm after being held at 130°C for 1h.

**15.** The separator of any one of claims 1-14, wherein after the separator is pierced by a needle with a cross-sectional area of $0.5mm^2$ and held at 150°C for 10 min, the needle hole has a hole expansion rate of ≤8%, optionally ≤5%, further optionally ≤4%, and still further optionally ≤3%;
wherein, the hole expansion rate is $(S_1-S_0)/S_0\times 100\%$, wherein $S_0$ represents the initial area of the needle hole, and $S_1$ represents the needle hole area after holding at 150°C for 10 min.

**16.** A method for preparing a separator, comprising:

(a) providing a molten base film formulation comprising a polymer and a pore-forming agent;
(b) extruding the base film formulation and cooling to form a sheet;

(c) stretching the sheet in MD direction;
(d) stretching the sheet in TD direction;
(e) removing the pore-forming agent from the sheet to form a porous sheet;
(f) heat-setting the porous sheet to obtain a base film;

wherein, the base film is used as the separator, or the base film is used as the separator after post-treatment;
the base film has a tensile energy per unit thickness of ≥1.8J/10μm in both longitudinal MD direction and transverse TD direction, and an elongation of ≥150% in both MD direction and TD direction;
wherein, the tensile energy per unit thickness is $\frac{F \times \Delta L}{d} \times 10$,
F represents a force value in N at which a test sample of the base film with a gauge length of 40mm and a width of 15mm is stretched to break at a constant rate of 50mm/min, ΔL represents a tensile displacement in m at which the test sample is stretched to break, and d represents an initial thickness in μm of the test sample;
the thickness of the base film is 2μm~40μm.

**17.** The method according to claim 16, wherein the post-treatment of the base film comprises: (g) forming a heat resistant layer on at least one surface of the base film.

**18.** The method according to claim 16 or 17, wherein the method satisfies one or more of the following (1)-(4):

(1) the temperature of the cooling in step (b) is 15°C~30°C, and optionally 20°C~25°C;
(2) the stretching ratio of the stretching in MD direction in step (c) is 3~6 times, optionally 3~5 times, and further optionally 3-4.5 times;
(3) the stretching ratio of the stretching in TD direction in step (d) is 3-6 times, optionally 3-5 times, and further optionally 3.5-5 times;
(4) the heat-setting in step (f) comprises heat-setting the porous sheet at a temperature of 130°C or higher, optionally the temperature is 130°C~150°C, and further optionally is 134°C~145°C.

**19.** An electrochemical device comprising the separator according to any one of claims 1-15 or the separator prepared by the method according to any one of claims 16-18.

**20.** An electrochemical apparatus including the electrochemical device according to claim 19.

**21.** A powered device including at least one of the electrochemical device according to claim 19 or the electrochemical apparatus according to claim 20.

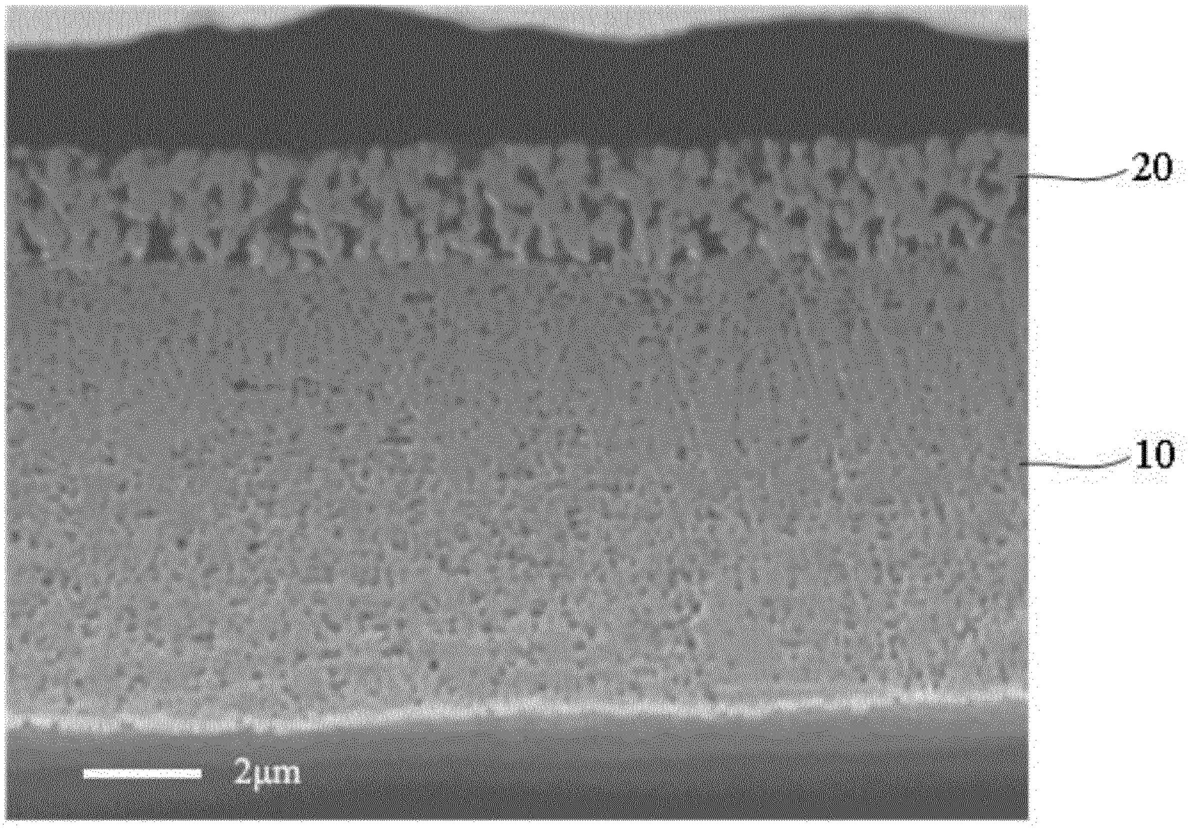


FIG. 1

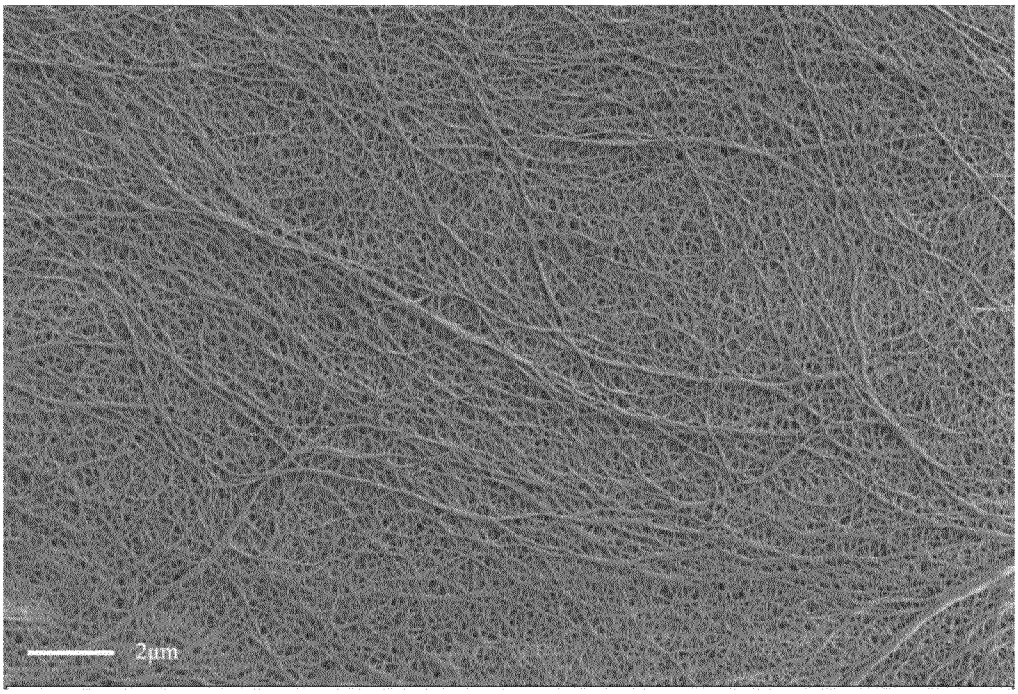


FIG. 2

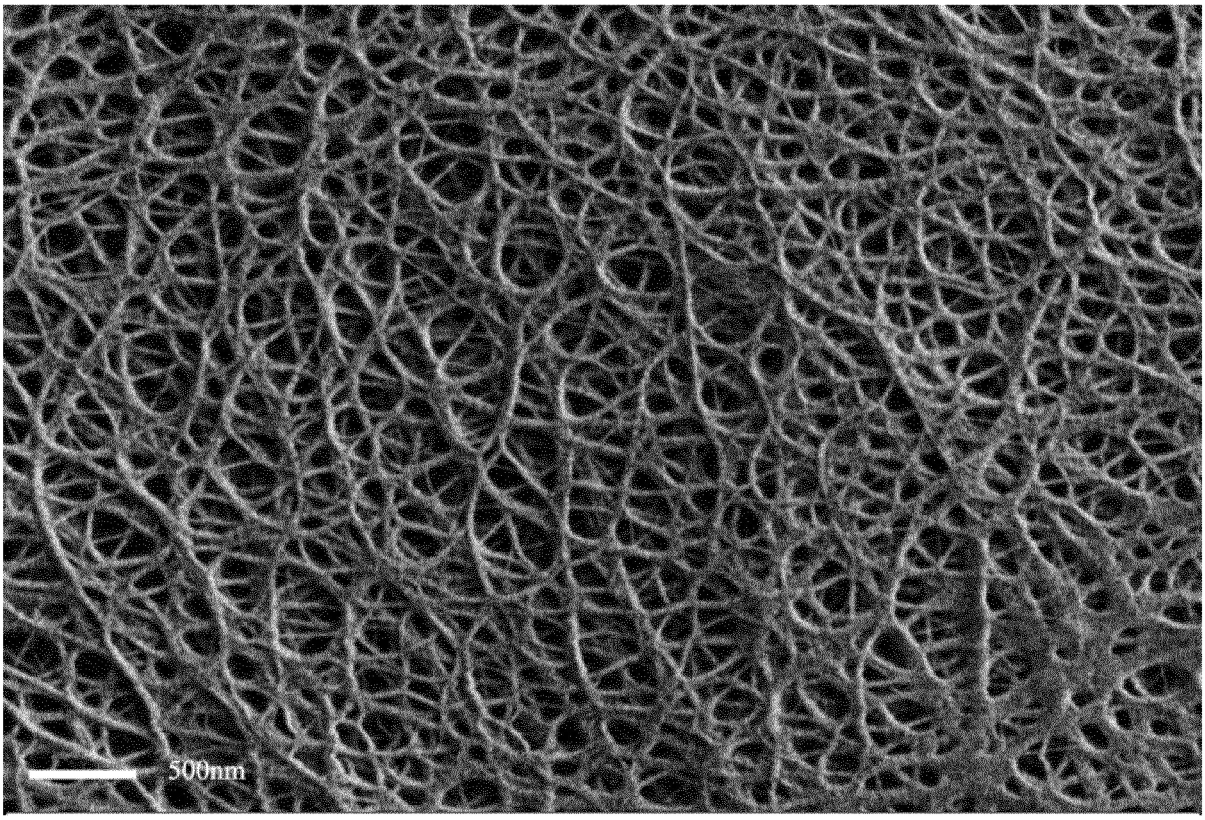


FIG. 3

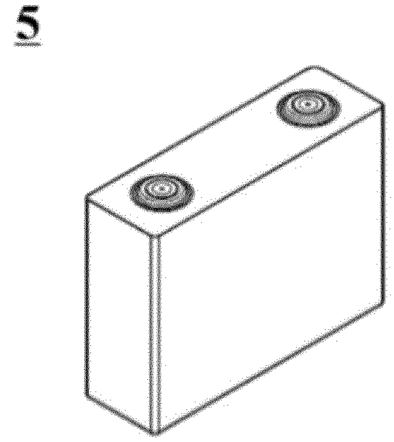


FIG. 4

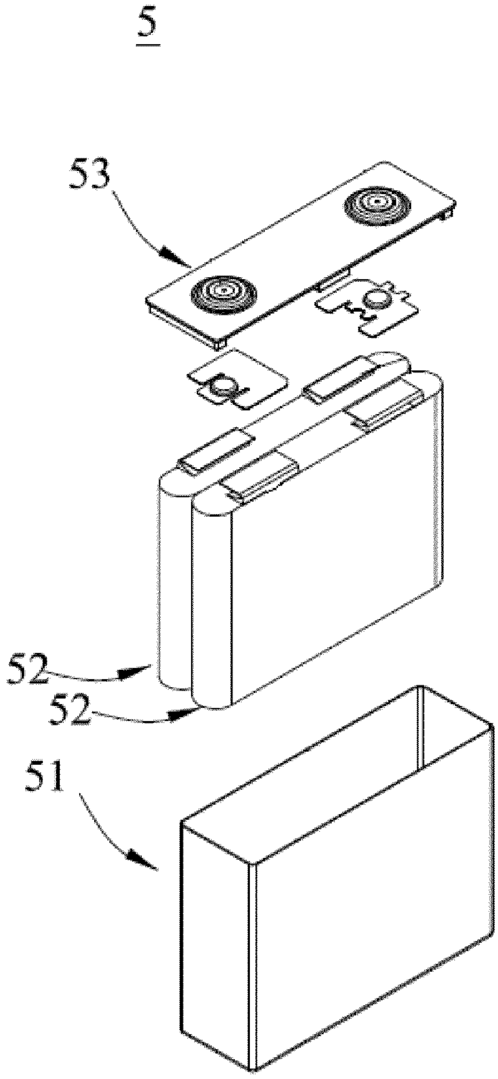


FIG. 5

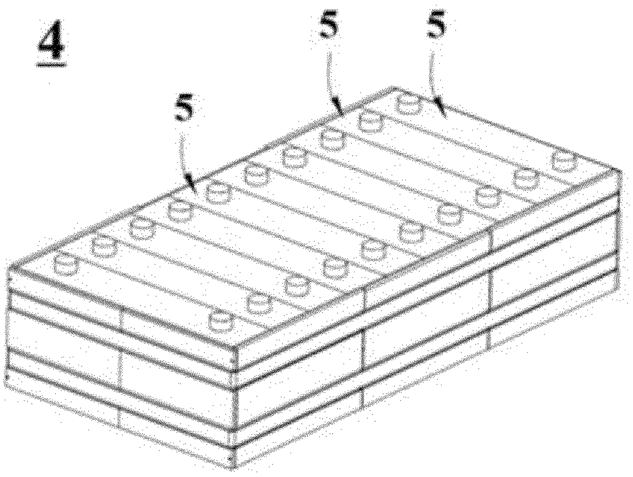


FIG. 6

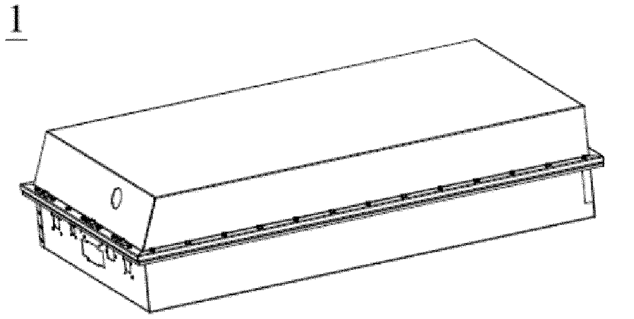


FIG. 7

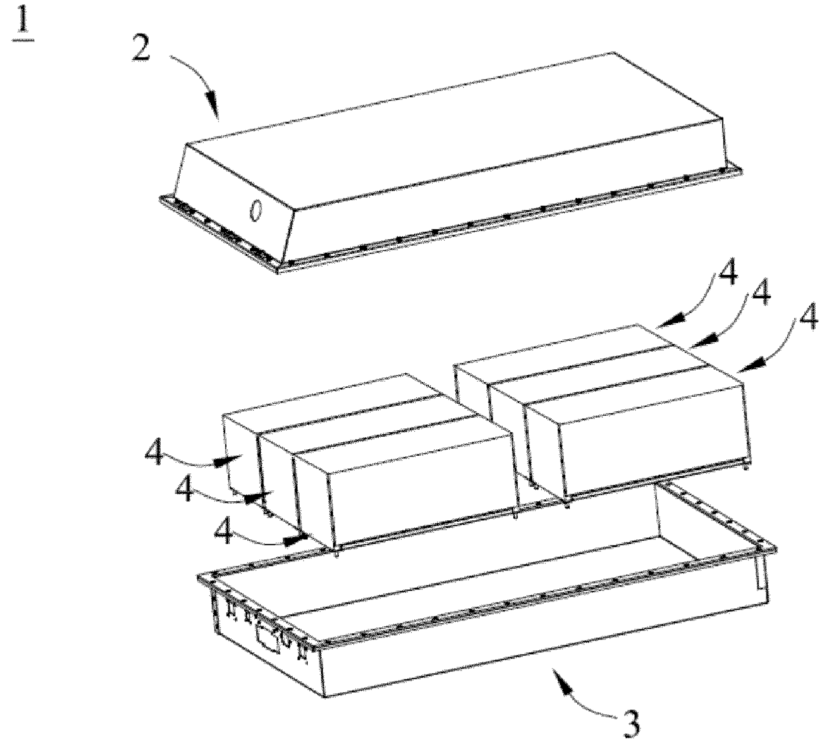


FIG. 8

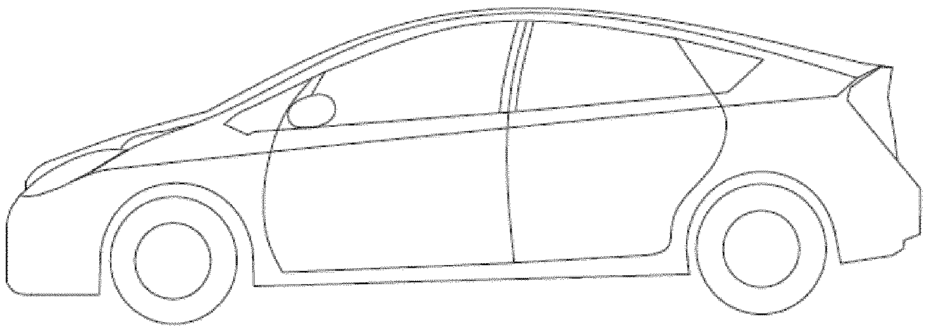

FIG. 9

**INTERNATIONAL SEARCH REPORT**

International application No.
**PCT/CN2021/109904**

**A. CLASSIFICATION OF SUBJECT MATTER**

H01M 50/409(2021.01)i；C08J 9/26(2006.01)i

According to International Patent Classification (IPC) or to both national classification and IPC

**B. FIELDS SEARCHED**

Minimum documentation searched (classification system followed by classification symbols)

H01M C08J

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 隔膜, 隔离膜, 基膜, 多孔, 微孔, 拉伸, 纵向, 横向, 双向, 重均分子量, seperat+, film, base, microporous, stretch+, longitudinal, machine, transverse, biaxial, direction, weight average molecular weight

**C. DOCUMENTS CONSIDERED TO BE RELEVANT**

| Category* | Citation of document, with indication, where appropriate, of the relevant passages | Relevant to claim No. |
|---|---|---|
| X | CN 106575734 A (TORAY BATTERY SEPARATOR FILM CO., LTD.) 19 April 2017 (2017-04-19)<br>description, paragraphs 14-82 | 1-21 |
| X | CN 110114397 A (TORAY INDUSTRIES, INC.) 09 August 2019 (2019-08-09)<br>description, paragraphs 176-185 | 1-21 |
| X | CN 106661264 A (TORAY BATTERY SEPARATOR FILM CO., LTD.) 10 May 2017 (2017-05-10)<br>description, paragraphs 133, 134, and 163-172 | 1-21 |
| X | CN 102774009 A (CHONGQING NIUMI NEW MATERIAL TECHNOLOGY CO., LTD.) 14 November 2012 (2012-11-14)<br>description, paragraphs 6-17, 20-21, 24, and 29-37 | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 April 2022** | **14 April 2022** |
| Name and mailing address of the ISA/CN<br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/109904**

| Patent document cited in search report | Publication date (day/month/year) | Patent family member(s) | Publication date (day/month/year) |
|---|---|---|---|
| CN 106575734 A | 19 April 2017 | JP WO2015194504 A1 | 20 April 2017 |
| | | KR 20170020764 A | 24 February 2017 |
| | | WO 2015194504 A1 | 23 December 2015 |
| | | KR 102320739 B1 | 01 November 2021 |
| | | JP 6680206 B2 | 15 April 2020 |
| | | CN 106575734 B | 24 April 2020 |
| CN 110114397 A | 09 August 2019 | EP 3594278 A1 | 15 January 2020 |
| | | KR 20190124199 A | 04 November 2019 |
| | | WO 2018164056 A1 | 13 September 2018 |
| | | TW 201836852 A | 16 October 2018 |
| | | US 2021005860 A1 | 07 January 2021 |
| | | JP WO2018164056 A1 | 16 January 2020 |
| | | JP 6988881 B2 | 05 January 2022 |
| | | EP 3594278 A4 | 25 November 2020 |
| CN 106661264 A | 10 May 2017 | EP 3181621 A1 | 21 June 2017 |
| | | JP WO2016024533 A1 | 25 May 2017 |
| | | WO 2016024533 A1 | 18 February 2016 |
| | | KR 20170041194 A | 14 April 2017 |
| | | HU E051857 T2 | 29 March 2021 |
| | | PL 3181621 T3 | 08 March 2021 |
| | | CN 106661264 B | 10 December 2019 |
| | | EP 3181621 B1 | 23 September 2020 |
| | | JP 6652059 B2 | 19 January 2020 |
| | | EP 3181621 A4 | 10 January 2018 |
| CN 102774009 A | 14 November 2012 | None | |

Form PCT/ISA/210 (patent family annex) (January 2015)